# EUROPÄISCHE PATENTSCHRIFT

(11) **EP 1 104 789 B1**
(45) Veröffentlichungstag und Bekanntmachung des Hinweises auf die Patenterteilung: **29.03.2006**
(21) Anmeldenummer: 00124596.8
(22) Anmeldetag: 10.11.2000
(51) Int. Cl.: C09B 67/22, C09B 57/00, C08K 5/3415

(54) **Pigmentdispergatoren auf Basis von Diketopyrrolopyrrolverbindungen und Pigmentzubereitungen**
Pigment dispersants based on dicetopyrrolopyrrole compounds and pigment dispersions
Dispersants pour pigments à base de dicétopyrrolopyrroles et dispersions de pigments

(30) Priorität: 02.12.1999 DE 19958181
(43) Veröffentlichungstag der Anmeldung: 06.06.2001
(73) Patentinhaber: Clariant Produkte (Deutschland) GmbH, 65929 Frankfurt am Main (DE)
(72) Erfinder: Weber, Joachim, Dr., 65929 Frankfurt am Main (DE); Grimm, Felix Wendelin, Dr., 65719 Hofheim (DE); Dietz, Erwin, Dr., 61462 Königstein (DE)

(56) Entgegenhaltungen:
- EP-A- 0 224 445
- EP-A- 0 321 919
- EP-A- 0 636 666
- EP-A- 0 763 572
- EP-A- 0 877 058
- EP-A- 0 962 499
- DE-A- 3 106 906
- US-A- 5 071 483
- US-A- 5 264 032
- US-A- 5 380 870
- PATENT ABSTRACTS OF JAPAN vol. 015, no. 145 (C-0823), 12. April 1991 (1991-04-12) -& JP 03 026767 A (TOYO INK MFG CO LTD), 5. Februar 1991 (1991-02-05)

## Beschreibung

Die vorliegende Erfindung betrifft neue Pigmentdispergatoren und Pigmentzubereitungen mit verbesserten coloristischen und rheologischen Eigenschaften sowie deren Herstellung und Verwendung zum Pigmentieren von hochmolekularen Materialien.

Pigmentzubereitungen sind Kombinationen von Pigmenten und strukturell zu Pigmenten analogen Pigmentdispergatoren, die mit spezifisch wirksamen Gruppen substituiert sind. Die Pigmentdispergatoren werden den Pigmenten zugesetzt, um die Dispergierung in den Anwendungsmedien, insbesondere in Lacken, zu erleichtern und um die rheologischen und coloristischen Eigenschaften der Pigmente zu verbessern. Die Viskosität der hochpigmentierten Lackkonzentrate (Millbase) wird erniedrigt und die Flockung der Pigmentteilchen vermindert. Dadurch kann beispielsweise die Transparenz und der Glanz erhöht werden. Dies ist insbesondere bei Metallicpigmenten erwünscht.

Es gibt eine Vielzahl von Vorschlägen zur Verbesserung der rheologischen und coloristischen Eigenschaften von organischen Pigmenten durch Zusatz von Pigmentdispergatoren, die jedoch nicht immer zum erhofften Resultat führen.

So beschreibt die EP-A-0 321 919 die Herstellung von Pigmentzubereitungen durch Mischen der Basispigmente mit methylenimidazolylgruppenhaltigen Pigmentderivaten. In der EP-A-0 877 058 wird die Herstellung von carbonamidgruppenhaltigen Pigmentdispergatoren und Pigmentzubereitungen mit diesen Pigmentdispergatoren beschrieben.

Die DE-A-3 106 906 beschreibt die Herstellung von sulfonamidgruppenhaltigen Pigmentdispergatoren. Pigmentdispergatoren auf Basis von Diketopyrrolopyrrolverbindungen werden jedoch nicht erwähnt. Die JP H3-26767 beschreibt sulfonamidgruppenhaltige Pigmentdispergatoren auf Basis von Diketopyrrolopyrrolverbindungen. Die mit ihnen hergestellten Pigmentzubereitungen erfüllen jedoch nicht alle Anforderungen hinsichtlich der anwendungstechnischen Eigenschaften, die an Pigmentzubereitungen gestellt werden. So zeigen sie eine ungenügende Lösemittel- und Überlackierechtheit, wodurch ihr universeller Einsatz sehr eingeschränkt ist.

Die US,A,5,071,483 beschreibt Pigment dispergatoren mit anmeldungsgemäßen Aminosulfonylsubstituenten. Diketo pyrrolopyrrolverbindungen mit Biphenylen seiten gruppen werden in den Druckschriften US,A,5,380,870 sowie EP,A,224,445 offenbart.

Es bestand ein Verbesserungsbedarf und daher die Aufgabe, Pigmentzubereitungen zur Verfügung zu stellen, die die genannten Nachteile des Standes der Technik überwinden.

Es wurde gefunden, dass die Aufgabe überraschenderweise durch Pigmentdispergatoren auf Basis spezieller Diketopyrrolopyrrolverbindungen gelöst wird.

Gegenstand der Erfindung sind Pigmentdispergatoren der allgemeinen Formel (I), 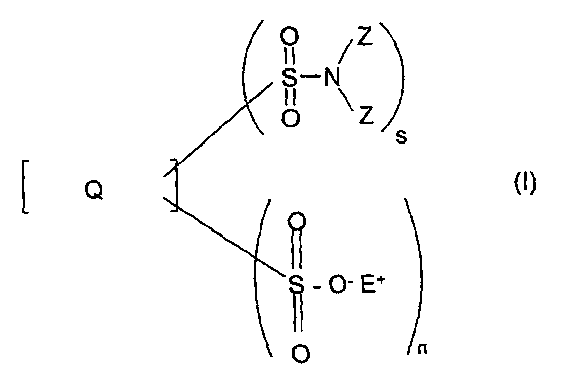 worin Q ein Rest der Diketopyrrolopyrrolverbindung der Formel (Ia) ist, 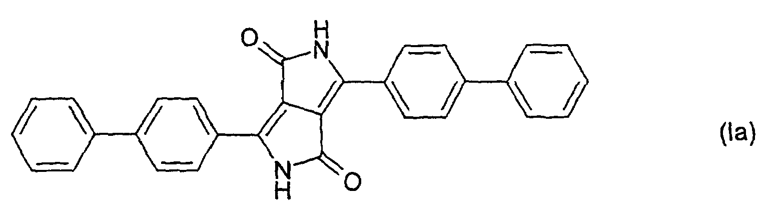
- s: eine Zahl von 0,1 bis 4,0 darstellt,
- n: eine Zahl von 0 bis 2 darstellt,
- E⁺: H⁺ oder das Äquivalent M^{m+}/m eines Metalikations M^{m+} aus der 1. bis 5.

Hauptgruppe oder aus der 1. oder 2. oder der 4. bis 8. Nebengruppe des Periodensystems der chemischen Elemente bezeichnet, wobei m eine der Zahlen 1, 2 oder 3 ist, wie z.B. Li¹⁺, Na¹⁺, K¹⁺, Mg²⁺, Ca²⁺, Sr²⁺, Ba²⁺, Mn²⁺, Cu²⁺, Ni²⁺, Co²⁺, Zn²⁺, Fe²⁺, Al³⁺, Cr³⁺ oder Fe³⁺; ein Ammoniumion N⁺R⁹R¹⁰R¹¹R¹², wobei die Substituenten R⁹, R¹⁰, R¹¹ und R¹² unabhängig voneinander jeweils ein Wasserstoffatom, C₁-C₃₀-Alkyl, C₂-C₃₀-Alkenyl, C₅-C₃₀-Cycloalkyl, Phenyl, (C₁-C₈)-Alkyl-phenyl, (C₁-C₄)-Alkylen-phenyl, beispielsweise Benzyl, oder eine (Poly)alkylenoxy-gruppe der Formel -[CH(R⁸⁰)CH(R⁸⁰)-O]ₖ-H sind, in der k eine Zahl von 1 bis 30 ist und die beiden Reste R⁸⁰ unabhängig voneinander Wasserstoff, C₁-C₄-Alkyl oder, sofern k > 1 ist, eine Kombination davon bedeuten; und worin als R⁹, R¹⁰, R¹¹, und/oder R¹² ausgewiesenes Alkyl, Alkenyl, Cycloalkyl, Phenyl oder Alkylphenyl durch Amino, Hydroxy, und/oder Carboxy substituiert sein können;
oder wobei die Substituenten R⁹ und R¹⁰ zusammen mit dem quartären N-Atom ein fünf- bis siebengliedriges gesättigtes Ringsystem, das ggf. noch weitere Heteroatome aus der Gruppe O, S und N enthält, bilden können, z.B. vom Pyrrolidon-, Imidazolidin-, Hexamethylenimin-, Piperidin-, Piperazin- oder Morpholin-Typ;
oder wobei die Substituenten R⁹, R¹⁰, und R¹¹ zusammen mit dem quartären N-Atom ein fünf- bis siebengliedriges aromatisches Ringsystem, das ggf. noch weitere Heteroatome aus der Gruppe O, S und N enthält und an dem ggf. zusätzliche Ringe ankondensiert sind, bilden können, z.B. vom Pyrrol-, Imidazol-, Pyridin-, Picolin-, Pyrazin-, Chinolin- oder Isochinolin-Typ;
oder worin E⁺ ein Ammoniumion der Formel (Ic) definiert, 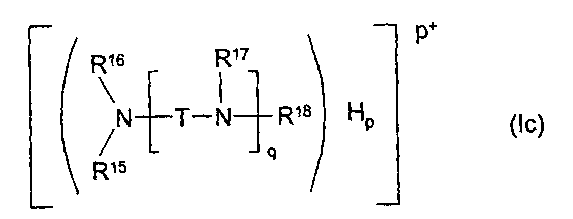 worin
- R¹⁵, R¹⁶, R¹⁷ und R¹⁸: unabhängig voneinander Wasserstoff oder eine (Poly)alkylenoxygruppe der Formel -[CH(R⁸⁰)-CH(R⁸⁰)O]ₖ-H bedeuten, in der k eine Zahl von 1 bis 30 ist und die beiden Reste R⁸⁰ unabhängig voneinander Wasserstoff, C₁-C₄-Alkyl oder, sofern k > 1 ist, eine Kombination davon bedeuten;
- q: eine Zahl von 1 bis 10, vorzugsweise 1, 2, 3, 4 oder 5 ist;
- p: eine Zahl von 1 bis 5, wobei p ≤q+1 ist;
- T: einen verzweigten oder unverzweigten C₂-C₆-Alkylenrest bedeutet; oder worin T, wenn q > 1 ist, auch eine Kombination von verzweigten oder unverzweigten C₂-C₆-Alkylenresten sein kann;
und worin die beiden Reste Z gleich oder verschieden sind und Z die Bedeutung Z¹ oder Z⁴ hat, worin
- Z¹: ein Rest der Formel (1b) ist,

-[X-Y]_{q}R³ (Ib)

worin
- X: einen C₂-C₆-Alkylenrest, einen C₅-C₇-Cycloalkylenrest, oder eine Kombination dieser Reste ist, wobei diese Reste durch 1 bis 4 C₁-C₄- Alkylreste, Hydroxyreste, (C₁-C₄)-Hydroxyalkylreste und/oder durch 1 bis 2 weitere
C₅-C₇-Cycloalkylreste substituiert sein können, oder worin X, wenn q > 1 ist, auch eine Kombination der genannten Bedeutungen sein kann;
- Y: eine -O-, 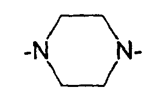 oder -NR²-Gruppe, oder worin Y, wenn q > 1 ist, auch eine Kombination der genannten Bedeutungen sein kann;
- q: eine Zahl von 1 bis 10, vorzugsweise 1, 2, 3, 4 oder 5;
- R² und R³: unabhängig voneinander ein Wasserstoffatom, eine substituierte oder unsubstituierte, oder teil- oder perfluorierte, verzweigte oder unverzweigte (C₁-C₂₀)-Alkylgruppe, eine substituierte oder unsubstituierte C₅-C₇- Cycloalkylgruppe oder eine substituierte oder unsubstituierte, oder teil-oder perfluorierte (C₂-C₂₀)-Alkenylgruppe darstellen, wobei die Substituenten Hydroxy, Phenyl, Cyano, Chlor, Brom, Amino, C₂-C₄-Acyl oder C₁-C₄-Alkoxy sein und vorzugsweise 1 bis 4 an der Zahl sein können, oder
- R² und R³: zusammen mit dem N-Atom einen gesättigten, ungesättigten oder aromatischen heterocyclischen 5- bis 7-gliedrigen Ring bilden, der gegebenenfalls 1 oder 2 weitere Stickstoff-, Sauerstoff- oder Schwefelatome oder Carbonylgruppen im Ring enthält, gegebenenfalls durch 1, 2 oder 3 der Reste OH, Phenyl, CN, Cl, Br, C₁-C₄-Alkyl, C₁-C₄- Alkoxy,C₂-C₄-Acyl und Carbamoyl substituiert ist, und der gegebenenfalls 1 oder 2 benzoannellierte gesättigte, ungesättigte oder aromatische, carbocyclische oder heterocyclische Ringe trägt;
und worin
- Z⁴: Wasserstoff, Hydroxy, Amino, Phenyl, (C₁-C₄)-Alkylen-phenyl, C₅-C₇-Cycloalkyl oder C₁-C₂₀-Alkyl ist, wobei der Phenylring, die (C₁-C₄)-Alkylen-phenyl-Gruppe und die Alkylgruppe durch ein oder mehrere, z.B. 1, 2, 3 oder 4, Substituenten aus der Gruppe Cl, Br, CN, NH₂, OH, C₆H₅, mit 1,2 oder 3 C₁-C₄-Alkoxyresten substituiertes C₆H₅, Carbamoyl, C₂-C₄-Acyl und C₁-C₄-Alkoxy, z.B. Methoxy oder Ethoxy, substituiert sein können, der Phenylring und die (C₁-C₄)-Alkylen-phenyl-Gruppe auch durch NR²R³ substituiert sein können, wobei R² und R³ die oben genannte Bedeutung haben, oder die Alkylgruppe perfluoriert oder teilfluoriert ist.

Von Interesse sind Pigmentdispergatoren der Formel (I) mit s = 0,2 - 3,0 und n = 0 - 0,5. Von besonderem Interesse sind Pigmentdispergatoren der Formel (I) mit s = 0,5 - 2,5 und n=0-0,2.

Von Interesse sind weiterhin Pigmentdispergatoren der Formel (I), worin
- R² und R³: unabhängig voneinander ein Wasserstoffatom, eine C₁-C₆-Alkylgruppe oder eine durch 1 bis 2 Substituenten aus der Gruppe Hydroxy, Acetyl, Methoxy, Ethoxy, Chlor und Brom substituierte C₁-C₆-Afkyfgruppe darstellen, oder
- R² und R³: zusammen mit dem angrenzenden N-Atom einen Imidazolyl-, Piperidinyl-, Morpholinyl-, Pipecolinyl-, Pyrrolyl-, Pyrrolidinyl-, Pyrazolyl-, Pyrrolidinonyl-, Indolyl- oder Piperazinyl-Ring bilden.

Von Interesse sind weiterhin Pigmentdispergatoren der Formel (I), worin X ein C₂-C₄-Alkylenrest oder Cyclohexylen bedeutet. Von besonderem interesse sind Pigmentdispergatoren der Formel (I), worin Z¹ die Bedeutung -[(CH₂)₃-NH]₂-H, -(CH₂-CH₂-NH)₂H,
-(CH₂)₃-NH-(CH₂)₂-NH-(CH₂)₃-NH₂, 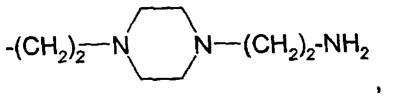 -(CH₂)₃-N(CH₃)-(CH₂)₃-NH₂, -(CH₂)₃-O-(CH₂)-O-(CH₂)₃-NH₂. -(CH₂)₃-O-(CH₂)₃-O-(CH₂)₃-NH₂, -(CH₂)₂-NH-(CH₂)₃-NH₂, -(CH₂)₃-NH-(CH₂)₂-NH₂, -(CH₂-CH₂-NH)₃-H, -(CH₂-CH₂-NH)₄-H, -(CH₂-CH₂-NH)₅-H, -(CH₂)₃-O-(CH₂)₂-O-(CH₂)₂-O-(CH₂)₃-NH₂, -(CH₂)₃-O-(CH₂)₄-O-(CH₂)₃-NH₂, 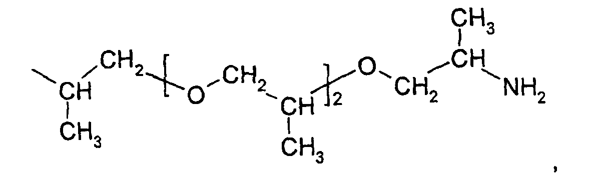 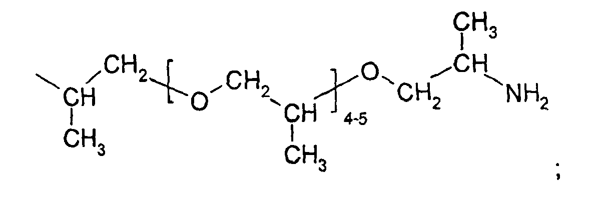 -(CH₂)₂-OH, -(CH₂)₃-OH, -CH₂-CH(CH₃)-OH, -CH(CH₂-CH₃)CH₂-OH, -CH(CH₂OH)₂, -(CH₂)₂-O-(CH₂)₂-OH oder -(CH₂)₃-O-(CH₂)₂-O-(CH₂)₂-OH; -(CH₂)₂-NH₂, -(CH₂)₃-NH₂, -CH₂-CH(CH₃)-NH₂,
-CH₂ -C(CH₃)₂-CH₂-NH₂, 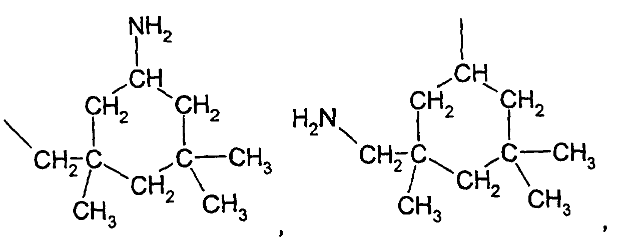 -(CH₂)₂-NH-CH₃, -(CH₂)₂-N(CH₃)₂, -(CH₂)₂-NH-CH₂-CH₃, -(CH₂)₂-N(CH₂-CH₃)₂, -(CH₂)₃-NH-CH₃, -(CH₂)₃-N(CH₃)₂, -(CH₂)₃-NH-CH₂-CH₃ oder -(CH₂)₃-N(CH₂-CH₃)₂ hat.

Von Interesse sind weiterhin Pigmentdispergatoren der Formel (I), worin Z⁴ Wasserstoff, Amino, Phenyl, Benzyl, mit NR²R³ substituiertes Phenyl oder Benzyl, C₁-C₆-Alkyl, oder ein durch 1 bis 2 Substituenten aus der Gruppe Hydroxy, Acetyl, Methoxy und Ethoxy substituiertes C₂-C₆-Alkyl, Phenyl oder Benzyl, besonders bevorzugt Wasserstoff,

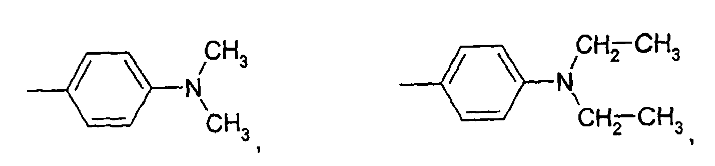

Methyl, Ethyl, propyl, Butyl, Benzyl, Hydroxyethyl, Hydroxypropyl oder Methoxypropyl ist.

Die erfindungsgemäßen Pigmentdispergatoren lassen sich durch Chlorsulfonierung der Diketopyrrolopyrrolverbindung der Formel (la)
und anschließender Umsetzung des Sulfochlorids mit einem Amin der Formel (V) 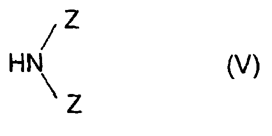 worin Z die oben genannte Bedeutung hat, herstellen.

Als Amine der allgemeinen Formel (V) können beispielsweise Ammoniak, Methylamin, Ethylamin, n-Propylamin, Isopropylamin, n-Butylamin, sek-Butylamin, Isopentylamin, n-Hexylamin, Dimethylamin, Diethylamin, Dibutylamin, N-Ethylbutylamin, β-Hydroxyethylamin, β- oder γ-Hydroxypropylamin, N-Methylethanolamin, Diethanolamin, 3-(2-Hydroxyethylamino)-1-propanol, N-(2-Hydroxyethyl)anilin, Hydroxylamin, Hydrazin, N,N-Dimethyl-p-phenylendiamin, Dimethylaminomethylamin, Diethylaminoethylamin, 2-Ethylhexylaminoethylamin, Stearylaminoethylamin, Oleylaminoethylamin, Dimethylaminoproyplamin, Diethylaminopropylamin, Dibutylaminopropylamin, Diethylaminobutylamin, Dimethylaminoamylamin, Diethylaminohexylamin, 1-Diethylamino-4-aminopentan, Piperidinomethylamin, Piperidinoethylamin, Piperidinopropylamin, Pipecolinoethylamin, Pipecolinopropylamin, Imidazolopropylamin, Morpholinoethylamin, Morpholinopropylamin, Piperazinoethylamin, 2-Methoxyethylamin, 3-Ethoxypropylamin, Di-(2-methoxyethyl)amin, Cyclohexylamin, N-Ethylcyclohexylamin, Dicyclohexylamin, Benzylamin, 2-Phenylethylamin, 4-Methoxyphenylethylamin, 1-Methyl-3-phenylpropylamin, 2-(3,4-Dimethoxyphenyl)ethylamin, Anilin, o-Toluidin, p-Toluidin, N-Ethylanilin, 3-(Cyclohexylamino)propylamin, 2-(2-Aminoethoxy)ethanol, 2-(2-(3-Aminopropoxy)ethoxy)ethanol, 3,3'-Oxybis(ethylenoxy)bis(propylamin), Ethylendiamin, 1,2-Propandiamin, 1,3-Propandiamin, 2,2-Dimethyl-1,3-propandiamin, Isophorondiamin, Diethylentriamin, Triethylentetramin, Tetraethylenpentamin, Pentaethylenhexamin, Dipropylentriamin, N,N-Bis-(3-aminopropyl)methylamin, Tripropylentetramin, 3-(2-Aminoethyl)aminopropylamin, N,N'-Bis(3-aminopropyl)ethylendiamin, Bis-(3-dimethylaminopropyl)amin, 4,7-Dioxadecan-1,10-diamin, 4,9-Dioxadodecan-1,12-diamin, 5-Amino-1,3,3-trimethylcyclohexanmethanamin oder 1,4-Bis-(3-aminopropoxy)-butan eingesetzt werden.

Die Chlorsulfonierung wird zweckmäßigerweise so durchgeführt, dass Chlorsulfonsäure im 4 bis 25-fachen Gewichtsüberschuß, bezogen auf das Diketopyrrolopyrrol, eingesetzt und vorzugsweise noch eine 1 bis 10-fache molare Menge, bezogen auf das Diketopyrrolopyrrol, an Thionylchlorid zugegeben wird. Die Chiorsuifonierung wird vorzugsweise bei einer Temperatur von -10 bis +150°C, insbesondere bei 0 bis 100°C, ggf. unter Druck, durchgeführt. Das Diketopyrrolopyrrol-Sulfochlorid wird zweckmäßigerweise in Wasser gefällt und isoliert.
Die Umsetzung des Sulfochlorids mit dem Amin geschieht vorzugsweise bei einer Temperatur von 0 bis 100°C, insbesondere bei 0 bis 70°C. Die molaren Mengen von Amin : Sulfochlorid betragen zweckmäßigerweise (0,5 bis 10) zu 1, insbesondere (1 - 4):1.

Gegenstand der vorliegenden Erfindung ist weiterhin eine Pigmentzubereitung, gekennzeichnet durch einen Gehalt an
a) mindestens einem organischen Basispigment und
b) mindestens einem Pigmentdispergator der Formel (I).

Unter Basispigment werden organische Pigmente oder Mischungen organischer Pigmente verstanden, die auch als übliche Pigmentzubereitungen vorliegen können. Geeignete Basispigmente für die Herstellung der erfindungsgemäßen Pigmentzubereitungen sind beispielsweise Perylen-, Perinon-, Chinacridon-, Chinacridonchinon-, Anthrachinon-, Anthanthron-, Benzimidazolon-, Disazokondensations-, Azo-, Indanthron-, Phthalocyanin-, Triarylcarbonium-, Dioxazin-, Aminoanthrachinon-, Diketopyrrolopyrrol-, Thioindigo-, Isoindolin-, Isoindolinon-, Pyranthron-, Isoviolanthron-, Carbon Black-Pigmente (Ruß) oder Mischungen davon.

Bevorzugte Basispigmente im Sinne der vorliegenden Erfindung sind beispielsweise C.I. Pigment Red 123 (C.l. No. 71145), C.I. Pigment Red 149 (C.I. No. 71137), C.I.

Pigment Red 178 (C.I. No. 71 155), C.I. Pigment Red 179 (C.I. No. 71 130), C.I. Pigment Red 190 (C.I. 71 140), C.I. Pigment Red 224 (C.I. No. 71 127), C.I. Pigment Violet 29 (C.I. No. 71 129), C.l. Pigment Orange 43 (C.I. No. 71 105), C.I. Pigment Red 194 (C.l. No. 71 100), C.I. Pigment Violet 19 (C.I. No. 73 900), C.I. Pigment Red 122 (C.l. No. 73 915), C.I. Pigment Red 192, C.I. Pigment Red 202 (C.I. No. 73 907), C.I. Pigment Red 207, C.I. Pigment Red 209 (C.I. No. 73 905), C.I. Pigment Red 206 (C.I. No. 73 900/73 920), C.I. Pigment Orange 48 (C.I. No. 73 900/73 920), C.I. Pigment Orange 49 (C.I. No. 73 900/73 920), C.I. Pigment Orange 42, C.I. Pigment Yellow 147, C.I. Pigment Red 168 (C.I. No. 59 300), C.I. Pigment Yellow 120 (C.I. No. 11 783), C.I. Pigment Yellow 151 (C.I. No. 13 980), C.I. Pigment Brown 25 (C.I. No. 12 510), C.I. Pigment Violet 32 (C.I. No. 12 517), C.I. Pigment Orange 64; C.I. Pigment Brown 23 (C.I. No. 20 060), C.I. Pigment Red 166 (C.I. No. 20 730), C.I. Pigment Red 170 (C.I. No. 12 475), C.l. Pigment Orange 38 (C.l. No. 12 367), C.I. Pigment Red 188 (C.I. No. 12 467), C.l. Pigment Red 187 (C.I. No. 12 486), C.l. Pigment Orange 34 (C.l. No. 21 115), C.l. Pigment Orange 13 (C.l. No. 21 110), C.l. Pigment Red 9 (C.I. No. 12 460), C.I. Pigment Red 2 (C.l. No. 12 310), C.I. Pigment Red 112 (C.I. No. 12 340), C.I. Pigment Red 7 (C.l. No. 12 420), C.l. Pigment Red 210 (C.I. No. 12 477), C. l. Pigment Red 12 (C.I. No. 12 385), C.I. Pigment Blue 60 (C.l. No. 69 800), C.I. Pigment Green 7 (C.l. No. 74 260),C.I. Pigment Green 36 (C.l. No. 74 265); C.I. Pigment Blue 15:1, 15:2, 15:3, 15:4, 15:6 und 15 (C.I. No. 74 160); C.I. Pigment Blue 56 (C.I. No. 42 800), C.I. Pigment Blue 61 (C.I. No. 42 765:1), C.I. Pigment Violet 23 (C.I. No. 51 319), C.I. Pigment Violet 37 (C.I. No. 51 345), C.I. Pigment Red 177 (C.I. No. 65 300), C.I. Pigment Red 254 (C.I. No. 56 110), C.I. Pigment Red 255 (C.I. No. 56 1050), C.I. Pigment Red 264, C.I. Pigment Red 270, C.I. Pigment Red 272 (C.I. No. 56 1150), C.I. Pigment Red 71, C.I. Pigment Orange 73, C.I. Pigment Red 88 (C.l. No. 73 312).

Die erfindungsgemäßen Pigmentzubereitungen können neben dem Basispigment a) und dem Pigmentdispergator b) noch weitere übliche Zusatzstoffe enthalten, wie beispielsweise Füllstoffe, Stellmittel, oberflächenaktive Mittel, Harze, Entschäumer, Antistaubmittel, Extender, Farbmittel zum Nuancieren, Konservierungsmittel, Trocknungsverzögerungsmittel oder Additive zur Steuerung der Rheologie.

Bevorzugte Pigmentzubereitungen im Sinne der vorliegenden Erfindung bestehen im wesentlichen aus
a) 50 bis 99,5 Gew.-%, vorzugsweise 60 bis 98,8 Gew.-%, mindestens eines Basispigments a),
b) 0,5 bis 20 Gew.-%, vorzugsweise 1 bis 15 Gew.-%, mindestens eines, vorzugsweise 1 oder 2, Pigmentdispergators b) der Formel (I),
c) 0 bis 20 Gew.-%, vorzugsweise 0,1 bis 15 Gew.-% an oberflächenaktiven Mitteln und
d) 0 bis 20 Gew.-%, vorzugsweise 0,1 bis 10 Gew.-% an weiteren üblichen Zusatzstoffen,
wobei die Anteile der jeweiligen Komponenten auf das Gesamtgewicht der Zubereitung (100 Gew.-%) bezogen sind.

Als oberflächenaktive Mittel c) kommen anionische oder anionaktive, kationische oder kationaktive oder nichtionische Substanzen oder Mischungen davon in Betracht. Als anionaktive Substanzen kommen beispielsweise Fettsäuretauride, Fettsäure-N-methyltauride, Fettsäureisethionate, Alkylphenylsulfonate, Alkylnaphthalinsulfonate, Alkylphenolpolyglykolethersulfate, Fettalkoholpolyglykolethersulfate; Fettsäuren, z.B. Palmitin-, Stearin- und Ölsäure; Fettsäureamid-polyglykolethersulfate; Alkylsulfosuccinamate; Alkenylbernsteinsäurehalbester, Fettalkoholpolyglykolethersulfosuccinate, Alkansulfonate, Fettsäureglutamate, Alkylsulfosuccinate, Fettsäuresarkoside; Seifen, z.B. Alkalisalze von Fettsäuren, Naphthensäuren und Harzsäuren, z.B. Abietinsäure, alkalilöslische Harze, z.B. kolophoniummodifizierte Maleinatharze und Kondensationsprodukte auf Basis von Cyanurchlorid, Taurin, N,N-Dialkylamino-alkylamin, wie beispielsweise N,N-Diethylaminopropylamin, und p-Phenylendiamin in Betracht; bevorzugt sind Harzseifen, d.h. Alkalisalze von Harzsäuren. Als kationaktive Substanzen kommen beispielsweise quaternäre Ammoniumsalze, Fettaminoxalkylate, oxalkylierte Polyamine, Fettaminpolyglykolether, Fettamine, von Fettaminen oder Fettalkoholen abgeleitete Di- und Polyamine und deren Oxalkylate; von Fettsäuren abgeleitete Imidazoline, und Salze dieser kationenaktiven Substanzen in Betracht.

Als nichtionogene Substanzen kommen beispielsweise Aminoxide, Fettalkoholpolyglykolether, Fettsäurepolyglykolester, Betaine, wie Fettsäureamid-N-propyl-betaine, Phosphorsäureester von Fettalkoholen oder Fettalkoholpolyglykolethem, Fettsäureamidethoxylate, Fettalkohol-alkylenoxid-Addukte und Alkylphenolpolyglykolether in Betracht.

Bei den erfindungsgemäßen Pigmentzubereitungen handelt es sich in der Regel um feste Systeme von rieselfähiger, pulverförmiger Beschaffenheit oder um Granulate.

Der erfindungsgemäß erzielbare Dispergiereffekt beruht vermutlich auf einer Modifizierung der Oberflächenstruktur der Basispigmente mit dem Pigmentdispergator gemäß b). So sind in einer Reihe von Fällen die Wirksamkeit des Pigmentdispergators gemäß b) und die Qualität der damit erzeugten Pigmentzubereitungen abhängig vom Zeitpunkt der Zugabe des Pigmentdispergators gemäß b) im Herstellungsprozess des Basispigments. Werden mehr als ein Pigmentdispergator gemäß b) eingesetzt, so können sie gleichzeitig oder zu verschiedenen Zeitpunkten zugegeben werden oder können vor der Zugabe gemischt werden.

Die Wirksamkeit des Pigmentdispergators gemäß b) kann auch von seiner Teilchengröße und Teilchenform sowie vom Umfang der belegbaren Pigmentoberfläche abhängen. Es kann vorteilhaft sein, den Pigmentdispergator gemäß b) erst im in Aussicht genommenen Anwendungsmedium dem Basispigment zuzufügen. Die jeweilige optimale Konzentration des Pigmentdispergators gemäß b) muß durch orientierende Vorversuche ermittelt werden, da die Verbesserung der Eigenschaften der Basispigmente nicht immer linear mit der Pigmentdispergatormenge einhergeht.

Die erfindungsgemäßen Pigmentzubereitungen können Mischungen von einem oder mehreren, vorzugsweise 1 oder 2, Basispigmenten mit einem oder mehreren, vorzugsweise 1 oder 2, der Pigmentdispergatoren gemäß b) sein.

Gegenstand der Erfindung ist auch ein Verfahren zur Herstellung einer erfindungsgemäßen Pigmentzubereitung, dadurch gekennzeichnet, daß man den oder die Pigmentdispergator(en) gemäß b) und das oder die Basispigment(e) miteinander mischt oder an einem beliebigen Zeitpunkt ihres Herstellungsprozesses aufeinander einwirken läßt.

Der Herstellungsprozeß eines organischen Pigments umfaßt dessen Synthese, gegebenenfalls Feinverteilung, z.B. durch Mahlung oder Umfällen, gegebenenfalls Finish, sowie die Isolierung als Preßkuchen oder als trockenes Granulat oder Pulver. Beispielsweise kann der Pigmentdispergator gemäß b) vor oder während der Pigmentsynthese, unmittelbar vor oder während eines Feinverteilungsprozesses oder eines anschließenden Finish zugegeben werden. Dabei können Temperaturen von beispielsweise 0 bis 200 °C auftreten. Selbstverständlich kann der Pigmentdispergator gemäß b) auch in Teilportionen zu unterschiedlichen Zeiten zugegeben werden.

Die Zugabe des Pigmentdispergators gemäß b) im Rahmen eines Feinverteilungsprozesses erfolgt beispielsweise vor oder während einer Trockenmahlung eines Rohpigments mit oder ohne zusätzliche Mahlhilfsmittel auf einer Roll- oder Schwingmühle, oder vor oder während einer Naßmahlung eines Rohpigments in wäßrigem, wäßrig-organischem oder organischem Mahlmedium, beispielsweise auf einer Perlmühle.

Gleichfalls bewährt hat sich die Zugabe des Pigmentdispergators gemäß b) vor oder nach einem Finish des Basispigments in wäßrigem, wäßrig-alkalischem, wäßrig-organischem oder organischem Medium. Der Pigmentdispergator gemäß b) kann auch dem wasserfeuchten Pigmentpreßkuchen vor der Trocknung zugesetzt und eingearbeitet werden, wobei der Pigmentdispergator gemäß b) selbst ebenfalls als Preßkuchen vorliegen kann. Es ist weiterhin möglich, Trockenmischungen von Pulvern oder Granulaten des Pigmentdispergators gemäß b) mit dem Pulver oder Granulat eines oder mehrerer Basispigmente vorzunehmen, oder die Mischung durch Mahlung oder Pulverisierung der Komponente a) und b) zu erzielen.

Die erfindungsgemäßen Pigmentzubereitungen zeichnen sich durch hervorragende coloristische und rheologische Eigenschaften aus, insbesondere durch eine hervorragende Rheologie, hohe Flockungsstabilität, hohe Transparenz, leichte Dispergierbarkeit, gutes Glanzverhalten, hohe Farbstärke, einwandfreie Überlackier- und Lösemittelechtheiten sowie sehr gute Wetterechtheit. Sie sind für den Einsatz sowohl in lösemittelhaltigen als auch in wäßrigen Systemen geeignet.

Die erfindungsgemäß hergestellten Pigmentzubereitungen lassen sich zum Pigmentieren von hochmolekularen organischen Materialien natürlicher oder synthetischer Herkunft einsetzen, z.B. von Kunststoffen, Harzen, Lacken, Anstrichfarben oder elektrophotographischen Tonern und Entwicklern, sowie von Tinten und Druckfarben.

Hochmolekulare organische Materialien, die mit den genannten Pigmentzubereitungen pigmentiert werden können, sind beispielsweise Celluloseether und -ester, wie Ethylcellulose, Nitrocellulose, Celluloseacetat oder Cellulosebutyrat, natürliche Harze oder Kunstharze, wie Polymerisationsharze oder Kondensationsharze, z.B. Aminoplaste, insbesondere Harnstoff- und Melaminformaldehydharze, Alkydharze, Acrylharze, Phenoplaste, Polycarbonate, Polyolefine, wie Polystyrol, Polyvinylchlorid, Polyethylen, Polypropylen, Polyacrylnitril, Polyacrylsäureester, Polyamide, Polyurethane oder Polyester, Gummi, Casein, Silikon und Silikonharze, einzeln oder in Mischungen.

Dabei spielt es keine Rolle, ob die erwähnten hochmolekularen organischen Verbindungen als plastische Massen, Schmelzen oder in Form von Spinnlösungen, Lacken, Anstrichstoffen oder Druckfarben vorliegen. Je nach Verwendungszweck erweist es sich als vorteilhaft, die erfindungsgemäß erhaltenen Pigmentzubereitungen als Blend oder in Form von Präparationen oder Dispersionen zu benutzen. Bezogen auf das zu pigmentierende, hochmolekulare organische Material setzt man die erfindungsgemäßen Pigmentzubereitungen in einer Menge von 0,05 bis 30 Gew.-%, vorzugsweise 0,1 bis 15 Gew.-% ein.

Die erfindungsgemäßen Pigmentzubereitungen sind auch geeignet als Farbmittel in elektrophotographischen Tonern und Entwicklern, wie z.B. Ein- oder Zweikomponentenpulvertonern (auch Ein- oder Zweikomponenten-Entwickler genannt), Magnettoner, Flüssigtoner, Polymerisationstoner sowie Spezialtoner (Lit: L.B. Schein, "Electrophotography and Development Physics"; Springer Series in Electrophysics 14, Springer Verlag, 2nd edition, 1992).

Typische Tonerbindemittel sind Polymerisations-, Polyadditions- und Polykondensationsharze, wie Styrol-, Styrolacrylat-, Styrolbutadien-, Acrylat-, Polyester-, Phenol-Epoxidharze, Polysulfone, Polyurethane, einzeln oder in Kombination, sowie Polyethylen und Polypropylen, die noch weitere Inhaltsstoffe, wie Ladungssteuermittel, Wachse oder Fließhilfsmittel, enthalten können oder im Nachhinein mit diesen Zusätzen modifiziert werden.

Desweiteren sind die erfindungsgemäßen Pigmentzubereitungen geeignet als Farbmittel in Pulver und Pulverlacken, insbesondere in triboelektrisch oder elektrokinetisch versprühbaren Pulverlacken, die zur Oberflächenbeschichtung von Gegenständen aus beispielsweise Metall, Holz, Kunststoff, Glas, Keramik, Beton, Textilmaterial, Papier oder Kautschuk zur Anwendung kommen (J.F. Hughes, "Electrostatics Powder Coating" Research Studies, John Wiley & Sons, 1984).

Als Pulverlackharze werden typischerweise Epoxidharze, carboxyl- und hydroxylgruppenhaltige Polyesterharze, Polyurethan- und Acrylharze zusammen mit üblichen Härtern eingesetzt. Auch Kombinationen von Harzen finden Verwendung. So werden beispielsweise häufig Epoxidharze in Kombination mit carboxyl- und hydroxylgruppenhaltigen Polyesterharzen eingesetzt. Typische Härterkomponenten (in Abhängigkeit vom Harzsystem) sind beispielsweise Säureanhydride, Imidazole sowie Dicyandiamid und deren Abkömmlinge, verkappte Isocyanate, Bisacylurethane, Phenol- und Melaminharze, Triglycidylisocyanurate, Oxazoline und Dicarbonsäuren.

Außerdem sind die erfindungsgemäßen Pigmentzubereitungen als Farbmittel in Ink-Jet Tinten auf wäßriger und nichtwäßriger Basis sowie in solchen Tinten, die nach dem hot-melt-Verfahren arbeiten, geeignet.

Weiterhin sind die erfindungsgemäßen Pigmentzubereitungen auch als Farbmittel für Farbfilter sowohl für die additive wie subtraktive Farberzeugung geeignet.

Es ist auch möglich, daß erst im Anwendungsmedium der Pigmentdispergator gemäß b) dem Basispigment, oder umgekehrt, zugegeben wird. Gegenstand der Erfindung ist daher auch eine Pigmentpräparation, bestehend im wesentlichen aus einem oder mehreren organischen Basispigmenten a), einem oder mehreren Pigmentdispergatoren gemäß b), dem besagten hochmolekularen organischen Material, insbesondere Lack, gegebenenfalls oberflächenaktiven Mittel und/oder weiteren üblichen Zusatzstoffen. Die Gesamtmenge an Basispigment plus Pigmentdispergator gemäß b) ist z.B. 0,05 bis 30 Gew.-%, vorzugsweise 0,1 bis 15 Gew.-%, bezogen auf das Gesamtgewicht der Pigmentpräparation.

Zur Beurteilung der Eigenschaften der Pigmentzubereitungen auf dem Lacksektor wurden aus der Vielzahl der bekannten Lacke ein aromatenhaltiger Alkydmelaminharzlack (AM) auf Basis eines mittelöligen Alkydharzes und eines butanolveretherten Melaminharzes, ein Polyesterlack (PE) auf Basis von Celluloseacetobutyrat und eines Melaminharzes, ein High-Solid-Acrylharzeinbrennlack auf Basis einer nichtwäßrigen Dispersion (HS) sowie ein wäßriger Lack auf Polyurethanbasis (PUR) ausgewählt.

Die Bestimmung der Farbstärke und des Farbtons erfolgte nach DIN 55986. Die Rheologie des Mahlguts nach der Dispergierung (Millbase-Rheologie) wurde visuell anhand der folgenden fünfstufigen Skala bewertet
- 5: dünnflüssig
- 4: flüssig
- 3: dickflüssig
- 2: leicht gestockt
- 1: gestockt

Nach dem Verdünnen des Mahlguts auf die Pigmentendkonzentration wurde die Viskosität mit dem Viskospatel nach Rossmann, Typ 301 der Firma Erichsen beurteilt.

Glanzmessungen erfolgten an Folienaufgüssen unter einem Winkel von 20° nach DIN 67530 (ASTMD 523) mit dem "multigloss"-Glanzmeßgerät der Firma Byk-Mallinckrodt. Die Bestimmung der Lösemittelechtheit erfolgte nach DIN 55976. Die Bestimmung der Überlackierechtheit erfolgte nach DIN 53221.

In den nachfolgenden Beispielen bedeuten Teile jeweils Gewichtsteile und Prozente jeweils Gewichtsprozente. "min" sind Minuten.

### Beispiel 1 a

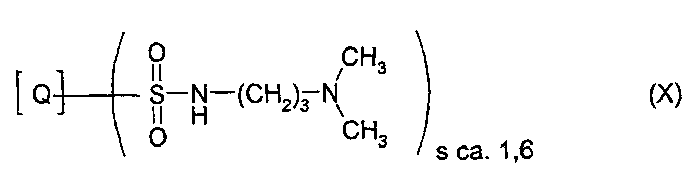

In einem Vierhalskolben werden 250 Teile Chlorsulfonsäure vorgelegt und 25 Teile 1,4-Diketo-3,6-di-(4-biphenyl)-pyrrolo[3,4-c]pyrrol so eingetragen und gelöst, daß die Temperatur 25 °C nicht überschreitet. Dann werden innerhalb 15 min 19,64 Teile Thionylchlorid zugetropft und 15 min gerührt. Die Lösung wird innerhalb 15 min auf 1000 Teile Eiswasser, hergestellt aus 333 Teilen Eis und 667 Teilen Wasser, getropft. Das ausgefallene Sulfochlorid wird filtriert und mit 750 Teilen kaltem Wasser gewaschen. In einem Vierhalskolben werden 70 Teile Eis, 70 Teile Wasser und 15,3 Teile 3-Dimethylamino-1-propylamin vorgelegt und bei 0 bis 5°C der Sulfochloridpresskuchen eingetragen. Dann wird 1 h bei 0 bis 5°C gerührt, in 30 min auf 25°C erwärmt, 30 min bei 25°C gerührt, in 30 min auf 50 °C erwärmt, 30 min bei 50°C gerührt, in 30 min auf 70°C erwärmt und 30 min bei 70°C gerührt. Das Produkt wird filtriert, mit Wasser gewaschen und bei 80°C im Umluftschrank getrocknet.
Man erhält 39,9 Teile Pigmentdispergator.
Aus den Intensitäten der ¹H-NMR-Signale errechnet sich ein Substitutionsgrad von s ca. 1,6.
¹H-NMR (D₂SO₄): δ 7,8; 7,6; 5,9; 3,1; 2,7; 2,5; 1,8 ppm.

### Beispiel 1b

30 Teile eines handelsüblichen Pigments (C.l. Pigment Red 264) werden mit 3 Teilen Pigmentdispergator der Formel X, hergestellt gemäß Beipiel 1a mechanisch gemischt.
Man erhält eine Pigmentzubereitung, die im HS-Lack transparente und farbstarke Lackierungen liefert. Die Glanzmessung ergibt den Wert 65. Die Metalliclackierung ist farbstark und brillant.

### Beispiel 2a

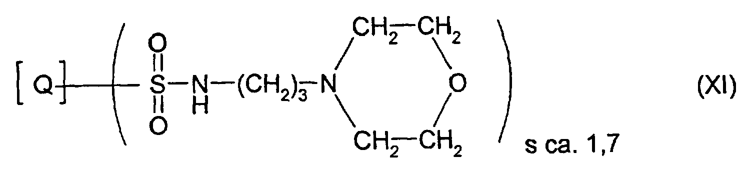

Man verfährt wie in Beispiel 1a, außer dass als Amin 21,63 Teile N-(3-Aminopropyl)-morpholin eingesetzt werden. Man erhält 42,1 Teile Pigmentdispergator.
¹H-NMR (D₂SO₄): δ 7,8; 7,6; 3,9; 3,6; 3,1; 2,8; 1,8 ppm.
Aus den Intensitäten der Signale errechnet sich ein Substitutionsgrad von s ca. 1,7.

### Beispiel 2b

30 Teile eines handelsüblichen Pigments (C.l. Pigment Red 264) werden mit 3 Teilen Pigmentdispergator der Formel XI, hergestellt gemäß Beipiel 2a mechanisch gemischt.
Man erhält eine Pigmentzubereitung, die im HS-Lack transparente und farbstarke Lackierungen liefert. Die Viskosität beträgt 2,6 s. Die Glanzmessung ergibt den Wert 75. Die Metalliclackierung ist farbstark und brillant.

### Beispiel 3a

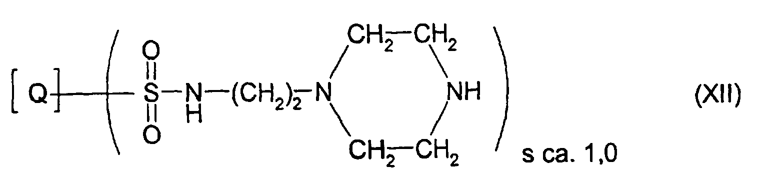

Man verfährt wie in Beispiel 1a, außer dass als Amin 19,38 Teile N-(2-Aminoethyl)-piperazin eingesetzt werden. Man erhält 39,3 Teile Pigmentdispergator.
¹H-NMR (D₂SO₄): δ 7,8; 7,6; 3,6; 3,1 ppm.
Aus den lntensitäten der Signale errechnet sich ein Substitutionsgrad von s ca. 1,0.

### Beispiel 3b

30 Teile eines handelsüblichen Pigments (C.l. Pigment Red 264) werden mit 3 Teilen Pigmentdispergator der Formel XII, hergestellt gemäß Beipiel 3a mechanisch gemischt. Man erhält eine Pigmentzubereitung, die im HS-Lack transparente und farbstarke Lackierungen liefert.

### Beispiel 4a

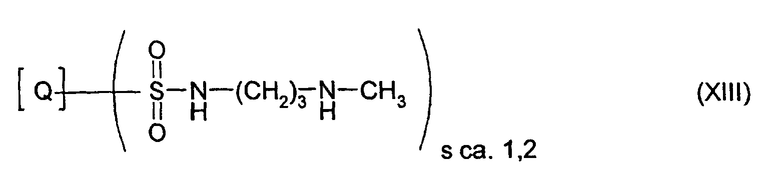

Man verfährt wie in Beispiel 1a, außer dass als Amin 13,22 Teile 3-(Methylamino)-propylamin eingesetzt werden. Man erhält 36,1 Teile Pigmentdispergator.
¹H-NMR (D₂SO₄): δ 7,8; 7,6; 3,2; 2,8; 2,6; 2,4; 1,9; 1,8 ppm.
Aus den Intensitäten der Signale errechnet sich ein Substitutionsgrad von s ca. 1,2.

### Beispiel 4b

30 Teile eines handelsüblichen Pigments (C.I. Pigment Red 264) werden mit 3 Teilen Pigmentdispergator der Formel XIII, hergestellt gemäß Beipiel 4a mechanisch gemischt. Man erhält eine Pigmentzubereitung, die im HS-Lack transparente und farbstarke Lackierungen liefert.

### Beispiel 5a

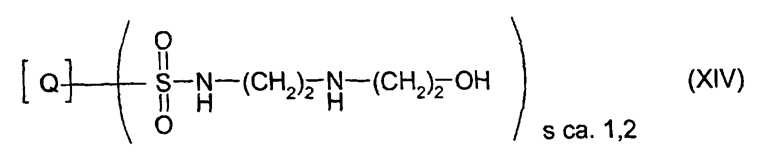

Man verfährt wie in Beispiel 1a, außer dass als Amin 15,62 Teile N-(2-Aminoethyl)-ethanolamin eingesetzt werden. Man erhält 37,5 Teile Pigmentdispergator.
¹H-NMR (D₂SO₄): δ 7,8; 7,6; 4,2; 4,1; 3,2; 3,1 ppm.
Aus den Intensitäten der Signale errechnet sich ein Substitutionsgrad von s ca. 1,2.

### Beispiel 5b

30 Teile eines handelsüblichen Pigments (C.I. Pigment Red 264) werden mit 3 Teilen Pigmentdispergator der Formel XIV, hergestellt gemäß Beipiel 5a mechanisch gemischt. Man erhält eine Pigmentzubereitung, die im HS-Lack transparente und farbstarke Lackierungen liefert.

### Beispiel 6a

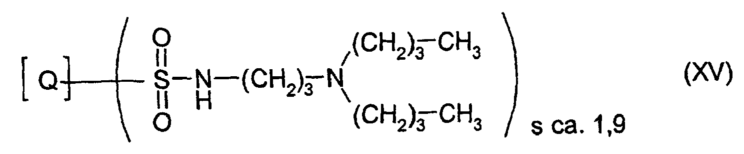

Man verfährt wie in Beispiel 1a, außer dass als Amin 28,5 Teile 3-(Dibutylamino)-1-propylamin 98 %ig eingesetzt werden. Man erhält 47,4 Teile Pigmentdispergator.
¹H-NMR (D₂SO₄): δ 7,8; 7,6; 3,1; 2,7; 2,6; 1,7; 1,2; 0,9; 0,5 ppm.
Aus den Intensitäten der Signale errechnet sich ein Substitutionsgrad von s ca. 1,9.

### Beispiel 6b

30 Teile eines handelsüblichen Pigments (C.l. Pigment Red 264) werden mit 3 Teilen Pigmentdispergator der Formel XV, hergestellt gemäß Beipiel 6a mechanisch gemischt.
Man erhält eine Pigmentzubereitung, die im HS-Lack transparente und farbstarke Lackierungen liefert. Die Rheologie wird mit 4 bis 5 bewertet und die Viskosität beträgt 1,1 s. Die Glanzmessung ergibt den Wert 81. Die Metalliclackierung ist farbstark und brillant.
Ohne Zusatz des Pigmentdispergators sind die HS-Lackierungen farbschwächer und wesentlich deckender. Die Rheologie wird mit 3 bewertet und die Viskosität beträgt 16,5 s. Die Glanzmessung ergibt den Wert 52. Die Metalliclackierung ist deutlich farbschwächer und weniger brillant.
Die Lackierung im PE-Lack ist transparent und farbstark. Die Glanzmessung ergibt den Wert 82. Die Metalliclackierung ist farbstark und brillant.
Ohne Zusatz des Pigmentdispergators sind die PE-Lackierungen farbschwächer, merklich deckender und so matt, daß ein Glanz nicht meßbar ist. Die Metalliclackierung ist bedeutend farbschwächer und weniger brillant.

### Beispiel 7a

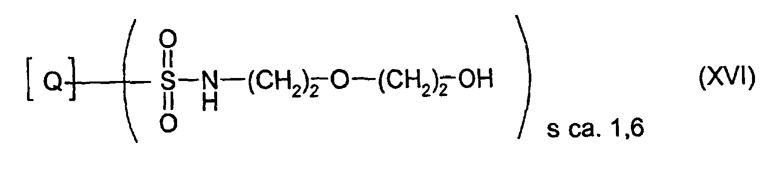

Man verfährt wie in Beispiel 1a, außer dass als Amin 15,77 Teile 2-(2-Aminoethoxy)-ethanol eingesetzt werden. Man erhält 40,5 Teile Pigmentdispergator.
¹H-NMR (D₂SO₄): δ 7,8; 7,6; 4,1; 3,5; 3,3; 2,9 ppm.
Aus den Intensitäten der Signale errechnet sich ein Substitutionsgrad von s ca. 1,6.

### Beispiel 7b

30 Teile eines handelsüblichen Pigments (C.I. Pigment Red 264) werden mit 3 Teilen Pigmentdispergator der Formel XVI, hergestellt gemäß Beipiel 7a mechanisch gemischt. Man erhält eine Pigmentzubereitung, die im HS-Lack transparente und farbstarke Lackierungen liefert.

### Beispiel 8a

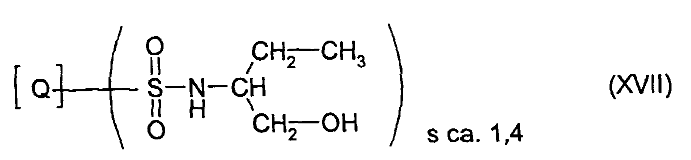

Man verfährt wie in Beispiel 1 a, außer dass als Amin 13,78 Teile 2-Amino-1-butanol eingesetzt werden. Man erhält 36,6 Teile Pigmentdispergator.
¹H-NMR (D₂SO₄): δ 7,8; 7,6; 4,3; 4,1; 3,7; 1,5; 0,6 ppm.
Aus den Intensitäten der Signale errechnet sich ein Substitutionsgrad von s ca. 1,4.

### Beispiel 8b

30 Teile eines handelsüblichen Pigments (C.l. Pigment Red 264) werden mit 3 Teilen Pigmentdispergator der Formel XVII, hergestellt gemäß Beipiel 8a mechanisch gemischt. Man erhält eine Pigmentzubereitung, die im HS-Lack transparente und farbstarke Lackierungen liefert.

### Beispiel 9a

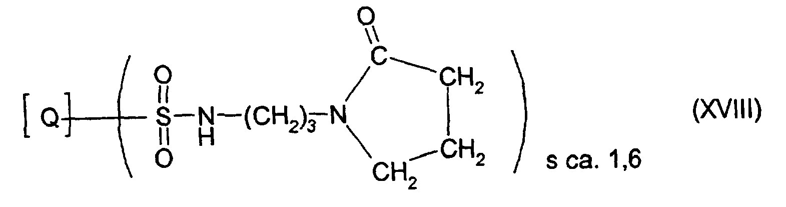

Man verfährt wie in Beispiel 1a, außer dass als Amin 21,33 Teile 1-(3-Aminopropyl)-2-pyrrolidinon eingesetzt werden. Man erhält 42,2 Teile Pigmentdispergator.
¹H-NMR (D₂SO₄): δ 7,8; 7,6; 3,4; 3,2; 2,9; 2,7; 1,8; 1,7 ppm.
Aus den Intensitäten der Signale errechnet sich ein Substitutionsgrad von s ca. 1,6.

### Beispiel 9b

30 Teile eines handelsüblichen Pigments (C.l. Pigment Red 264) werden mit 3 Teilen Pigmentdispergator der Formel XVIII, hergestellt gemäß Beipiel 9a mechanisch gemischt. Man erhält eine Pigmentzubereitung, die im HS-Lack transparente und farbstarke Lackierungen liefert.

### Beispiel 10a

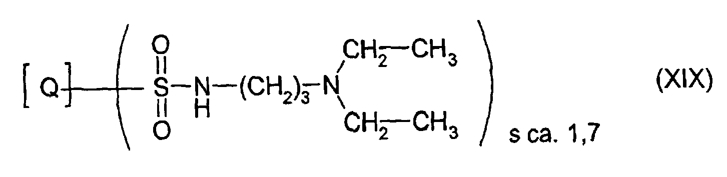

Man verfährt wie in Beispiel 1a, außer dass als Amin 19,54 Teile Diethylaminopropylamin eingesetzt werden. Man erhält 41,3 Teile Pigmentdispergator.
¹H-NMR (D₂SO₄): δ 7,8; 7,6; 3,1; 2,7; 1,7; 0,8 ppm.
Aus den Intensitäten der Signale errechnet sich ein Substitutionsgrad von s ca. 1,7. Die Lösemittelechtheit des Dispergators ist sehr gut.

### Beispiel 10b

30 Teile eines handelsüblichen Pigments (C.l. Pigment Red 264) werden mit 3 Teilen Pigmentdispergator der Formel XIX, hergestellt gemäß Beipiel 10a mechanisch gemischt.
Man erhält eine Pigmentzubereitung, deren Lösemittelechtheit sehr gut ist und die im HS-Lack transparente und farbstarke Lackierungen liefert. Die Rheologie wird mit 4-5 bewertet und die Viskosität beträgt 1,8 s. Die Glanzmessung ergibt den Wert 71. Die Metalliclackierung ist farbstark und brillant.
Ohne Zusatz des Pigmentdispergators sind die HS-Lackierungen farbschwächer und wesentlich deckender. Die Rheologie wird mit 3 bewertet und die Viskosität ist so hoch, daß sie mit dem Viskospatel nicht meßbar ist. Auch der Glanz ist durch die starke Flockung nicht meßbar. Die Metalliclackierung ist merklich farbschwächer und weniger brillant.
Die Lackierung im PE-Lack ist transparent und farbstark. Die Glanzmessung ergibt den Wert 33. Die Metalliclackierung ist farbstark und brillant.

Ohne Zusatz des Pigmentdispergators sind die PE-Lackierungen farbschwächer, deutlich deckender und so matt, daß ein Glanz nicht meßbar ist. Die Metalliclackierung ist wesentlich farbschwächer und weniger brillant.
Die Lackierung im AM-Lack ist transparent und farbstark. Die Glanzmessung ergibt den Wert 89. Die Viskosität beträgt 5,4 s.
Ohne Zusatz des Pigmentdispergators sind die AM-Lackierungen farbschwächer, wesentlich deckender und so matt, daß ein Glanz nicht meßbar ist. Die Viskosität ist so hoch, daß sie mit dem Viskospatel nicht meßbar ist.

### Beispiel 10c

28,5 Teile eines handelsüblichen Pigments (C.I. Pigment Red 264) werden mit 1,5 Teilen Pigmentdispergator der Formel XIX, hergestellt gemäß Beipiel 10a mechanisch gemischt. Die Lösemittelechtheit der Pigmentzubereitung ist sehr gut.

### Beispiel 11 a (Vergleichsbeispiel A, Pigmentdispergator der Formel XX gemäß JP-H3-26767, Beispiel 1)

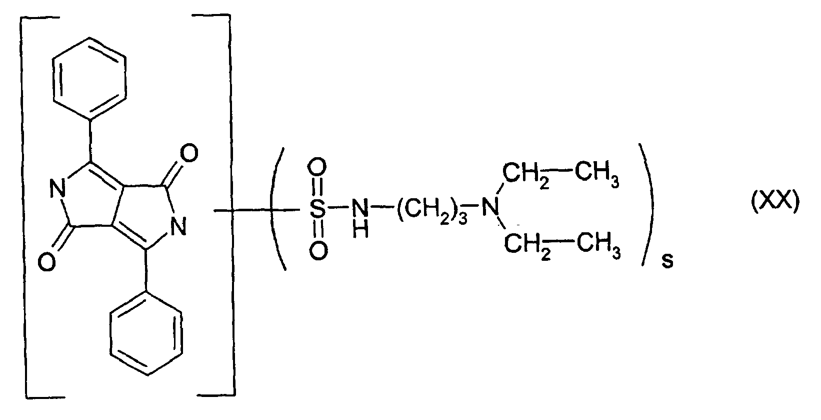

Der Pigmentdispergator der Formel XX wird wie in JP-H3-26767, Beispiel 1, beschrieben hergestellt.
¹H-NMR (D₂S0₄): δ 8,0; 7,9; 7,8; 7,7; 3,1; 2,7; 1,7; 0,8 ppm.
Aus den Intensitäten der Signale errechnet sich ein Substitutionsgrad von s ca. 1,2.

Die Lösemittelechtheit des Pigmentdispergators ist ungenügend. lm Vergleich zur Lösemittelechtheit des Pigmentdispergators der Formel XIX, hergestellt gemäß Beispiel 10a, ist sie bedeutend schlechter und damit deutlich unterlegen.

### Beispiel 11 b (Vergleichsbeispiel B: Pigmentzubereitung mit Pigmentdispergator aus JP-H3-26767, Beispiel 1)

28,5 Teile eines handelsüblichen Pigments (C.l. Pigment Red 264) werden mit 1,5 Teilen Pigmentdispergator der Formel XX, hergestellt gemäß Beipiel 11a mechanisch gemischt.
Die Lösemittelechtheit der Pigmentzubereitung ist ungenügend. Im Vergleich zur Lösemittelechtheit der Pigmentzubereitung, hergestellt gemäß Beispiel 10c, ist sie bedeutend schlechter und damit deutlich unterlegen.

### Beispiel 12a (PE-Lack)

Mit der Pigmentzubereitung, hergestellt gemäß Beispiel 10c, wird im PE-Lack eine Lackierung hergestellt. Die Überlackierechtheit ist einwandfrei, ein Ausbluten ist nicht zu erkennen.
Mit der Pigmentzubereitung, hergestellt gemäß Beispiel 11b, wird im PE-Lack eine Lackierung hergestellt. Die Überlackierechtheit ist mangelhaft, ein starkes Ausbluten ist sichtbar.

### Beispiel 12b (PUR-Lack)

Mit der Pigmentzubereitung, hergestellt gemäß Beispiel 10c, wird im PUR-Lack eine Lackierung hergestellt. Die Überlackierechtheit ist einwandfrei, ein Ausbluten ist nicht zu erkennen.

Mit der Pigmentzubereitung, hergestellt gemäß Beispiel 11 b, wird im PUR-Lack eine Lackierung hergestellt. Die Überlackierechtheit ist inakzeptabel, ein sehr starkes Ausbluten ist sichtbar.

### Beispiel 13a (Vergleichsbeispiel C: Pigmentdispergator der Formel (XX) gemäß Beispiel 10a)

Der Pigmentdispergator der Formel XX wird hergestellt gemäß Beispiel 10a mit dem einzigen Unterschied, daß an Stelle von 25 Teilen 1,4-Diketo-3,6-di-(4-biphenyl)-pyrrolo[3,4-c]pyrrol 16,4 Teile 1,4-Diketo-3,6-diphenylpyrrolo[3,4-c]pyrrol eingesetzt werden. Man erhält 17,2 Teile Pigmentdispergator.
¹H-NMR (D₂SO₄): δ 8,0; 7,9; 7,8; 7,7; 3,1; 2,7; 1,7; 0,8 ppm.
Aus den Intensitäten der Signale errechnet sich ein Substitutionsgrad von s ca. 0,12. Die Lösemittelechtheit des Pigmentdispergators ist ungenügend. Im Vergleich zur Lösemittelechtheit des Pigmentdispergators der Formel XIX, hergestellt gemäß Beispiel 10a, ist sie bedeutend schlechter und damit deutlich unterlegen.

### Beispiel 13b (Vergleichsbeispiel D: Pigmentzubereitung mit Pigmentdispergator der Formel (XX) aus Beispiel 13a)

30 Teile eines handelsüblichen Pigments (C.l. Pigment Red 264) werden mit 3 Teilen Pigmentdispergator der Formel (XX), hergestellt gemäß Beipiel 13a, mechanisch gemischt.
Die Lösemittelechtheit der Pigmentzubereitung ist ungenügend. Im Vergleich zur Lösemittelechtheit der Pigmentzubereitung, hergestellt gemäß Beispiel 10b, ist sie bedeutend schlechter und damit deutlich unterlegen.

### Beispiel 14a (PE-Lack)

Mit der Pigmentzubereitung, hergestellt gemäß Beispiel 10b, wird im PE-Lack eine Lackierung hergestellt. Die Lackierung ist transparent und farbstark, die Glanzmessung ergibt den Wert 33. Die Metalliclackierung ist farbstark und brillant. Die Überlackierechtheit ist einwandfrei, ein Ausbluten ist nicht zu erkennen.

Mit der Pigmentzubereitung, hergestellt gemäß Beispiel 13b, wird im PE-Lack eine Lackierung hergestellt. Sie ist, vergleichen mit obiger Lackierung, deutlich deckender, wesentlich farbschwächer, ein Glanz ist durch die starke Flockung nicht meßbar, die Metalliclackierung ist wesentlich farbschwächer und fahler. Die Überlackierechtheit ist mangelhaft, ein deutliches Ausbluten ist sichtbar.

### Beispiel 14b (PUR-Lack)

Mit der Pigmentzubereitung, hergestellt gemäß Beispiel 10b, wird im PUR-Lack eine Lackierung hergestellt. Die Überlackierechtheit ist einwandfrei, ein Ausbluten ist nicht zu erkennen.

Mit der Pigmentzubereitung, hergestellt gemäß Beispiel 13b, wird im PUR-Lack eine Lackierung hergestellt. Die Überlackierechtheit ist inakzeptabel, ein sehr starkes Ausbluten ist sichtbar.

### Beispiel 14c (HS-Lack)

Mit der Pigmentzubereitung, hergestellt gemäß Beispiel 10b, wird im HS-Lack eine Lackierung hergestellt. Sie ist transparent und farbstark. Die Rheologie wird mit 4 bis 5 bewertet und die Viskosität beträgt 1,8 s. Die Glanzmessung ergibt den Wert 71. Die Metalliclackierung ist farbstark und brillant. Die Überlackierechtheit ist einwandfrei.
Mit der Pigmentzubereitung, hergestellt gemäß Beispiel 13b, wird im HS-Lack eine Lackierung hergestellt. Sie ist, verglichen mit obiger Lackierung, merklich farbschwächer. Die Rheologie wird lediglich mit 3 bewertet und die Viskosität ist auf 3,0 s erhöht. Die Glanzmessung ergibt lediglich den Wert 43. Die Metalliclackierung ist wesentlich farbschwächer und fahler. Die Prüfung der Überlackierechtheit zeigt ein deutliches Ausbluten.

### Beispiel 15

20 Teile eines handelsüblichen Pigments (C.l. Pigment Red 177) werden mit 1 Teil Pigmentdispergator der Formel XV, hergestellt gemäß Beipiel 6a mechanisch gemischt.
Man erhält eine Pigmentzubereitung, die im HS-Lack Lackierungen liefert, die verglichen mit den Lackierungen des unbehandelten handelsüblichen Pigments (C.I. Pigment Red 177) transparenter, glänzender und deutlich farbstärker sind, die Volltonlackierungen des unbehandelten handelsüblichen Pigments (C.I. Pigment Red 177) zeigen einen Schleier. Die Metalliclackierungen der Pigmentpräparation sind bedeutend reiner und heller als die Metalliclackierungen des unbehandelten handelsüblichen Pigments (C.l. Pigment Red 177).
Im PE-Lack sind die Lackierungen der Pigmentzubereitung transparenter, wesentlich farbstärker und glänzender, die Metalliclackierungen sind wesentlich farbstärker und brillanter als die entsprechenden Lackierungen des unbehandelten handelsüblichen Pigments (C.I. Pigment Red 177).

### Beispiel 16

20 Teile eines handelsüblichen Pigments (C.l. Pigment Brown 25) werden mit 1 Teil Pigmentdispergator der Formel XV, hergestellt gemäß Beipiel 6a mechanisch gemischt.
Man erhält eine Pigmentzubereitung, die im HS-Lack Lackierungen liefert, die verglichen mit den Lackierungen des unbehandelten handelsüblichen Pigments (C.I. Pigment Brown 25) farbstärker sind. Die Metalliclackierungen der Pigmentpräparation sind farbstärker und brillanter.

### Beispiel 17

20 Teile eines handelsüblichen Pigments (C.l. Pigment Violet 23) werden mit 1 Teil Pigmentdispergator der Formel XV, hergestellt gemäß Beipiel 6a mechanisch gemischt.
Man erhält eine Pigmentzubereitung, die im HS-Lack Lackierungen liefert, die verglichen mit den Lackierungen des unbehandelten handelsüblichen Pigments (C.I. Pigment Violet 23) transparenter, farbstärker und wesentlich röter sind. Die Metalliclackierungen der Pigmentpräparation sind farbstärker, brillanter und wesentlich röter als die Metalliclackierungen des unbehandelten handelsüblichen Pigments (C.I. Pigment Violet 23).
Im PE-Lack sind die Lackierungen der Pigmentzubereitung transparenter, farbstärker und deutlich röter, die Metalliclackierungen sind farbstärker und röter als die entsprechenden Lackierungen des unbehandelten handelsüblichen Pigments (C.I. Pigment Violet 23).

### Beispiel 18

20 Teile eines handelsüblichen Pigments (C.l. Pigment Violet 19, β-Phase) werden mit 1 Teil Pigmentdispergator der Formel XV, hergestellt gemäß Beipiel 6a mechanisch gemischt.
Man erhält eine Pigmentzubereitung, die im PE-Lack Lackierungen liefert, die verglichen mit den Lackierungen des unbehandelten handelsüblichen Pigments (C.l. Pigment Violet 19, β-Phase) transparenter, farbstärker und reiner sind. Die Metalliclackierungen der Pigmentpräparation sind deutlich farbstärker und brillanter als die Metalliclackierungen des unbehandelten handelsüblichen Pigments (C.l. Pigment Violet 19, β-Phase).

### Beispiel 19

20 Teile eines handelsüblichen Pigments (C.l. Pigment Blue 15:1) werden mit 1 Teil Pigmentdispergator der Formel XV, hergestellt gemäß Beipiel 6a mechanisch gemischt.
Man erhält eine Pigmentzubereitung, die im HS-Lack Lackierungen liefert, die verglichen mit den Lackierungen des unbehandelten handelsüblichen Pigments (C.l. Pigment Blue 15:1) transparenter, glänzender und farbstärker sind. Die Metalliclackierungen der Pigmentpräparation sind farbstärker und brillanter als die Metalliclackierungen des unbehandelten handelsüblichen Pigments (C.l. Pigment Blue 15:1).
Im PE-Lack sind die Lackierungen der Pigmentzubereitung transparenter, die Metalliclackierungen sind wesentlich farbstärker und brillanter als die entsprechenden Lackierungen des unbehandelten handelsüblichen Pigments (C.I. Pigment Blue 15:1).

### Beispiel 20

20 Teile eines handelsüblichen Pigments (C.l. Pigment Blue 60) werden mit 1 Teil Pigmentdispergator der Formel XV, hergestellt gemäß Beipiel 6a mechanisch gemischt.
Man erhält eine Pigmentzubereitung, die im HS-Lack farbstarke und transparente Lackierungen liefert, die Metalliclackierungen sind farbstark und brillant.

### Beispiel 21

20 Teile eines handelsüblichen Pigments (C.l. Pigment Red 179) werden mit 1 Teil Pigmentdispergator der Formel XV, hergestellt gemäß Beipiel 6a mechanisch gemischt.
Man erhält eine Pigmentzubereitung, die im HS-Lack Lackierungen liefert, die verglichen mit den Lackierungen des unbehandelten handelsüblichen Pigments (C.l. Pigment Red 179) transparenter, farbstärker und glänzender sind. Die Metalliclackierungen der Pigmentpräparation sind farbstärker und brillanter.

### Beispiel 22

20 Teile eines handelsüblichen Pigments (C.I. Pigment Red 202) werden mit 1 Teil Pigmentdispergator der Formel XV, hergestellt gemäß Beipiel 6a mechanisch gemischt.
Man erhält eine Pigmentzubereitung, die im HS-Lack transparente und farbstarke Lackierungen liefert, die Metalliclackierungen sind farbstark und brillant.

### Beispiel 23

298,7 g tert.-Amylalkohol werden vorgelegt und 20,0 g Natrium zugegeben. Dann wird zum Sieden erhitzt und solange gerührt, bis alles Natrium umgesetzt ist. Nach Abkühlen auf 80°C werden 57,8 g p-Chlorbenzonitril eingetragen. Es wird auf 98-100°C erhitzt und innerhalb von 2 Stunden 62,7 g Bernsteinsäurediisopropylester zugetropft. Anschließend wird 3 Stunden und 45 Minuten bei Siedehitze gerührt. Nach Abkühlen auf 95°C werden 3 g Pigmentdispergator der Formel XV, hergestellt gemäß Beispiel 6a, zugegeben, wieder zum Sieden erhitzt und 15 Minuten bei Siedehitze gerührt. Die Reaktionssuspension wird auf 80°C abgekühlt und auf 450 g Wasser, welches vorher auf 80°C erwärmt wurde, unter Rühren gegossen. Die Mischung wird zum Sieden erhitzt und bei Siedehitze für 4 Stunden und 45 Minuten gerührt. Dann wird durch eine Wasserdampfdestillation der Alkohol entfernt. Die Pigmentsuspension wird filtriert, mit warmem Wasser salzfrei gewaschen und bei 80 °C im Vakuum getrocknet. Man erhält 72,2 g Pigmentzubereitung. Die Pigmentzubereitung liefert im HS-Lack transparente und farbstarke Lackierungen, die Rheologie wird mit 5 bewertet, die Glanzmessung ergibt den Wert 67.

### Beispiel 24a

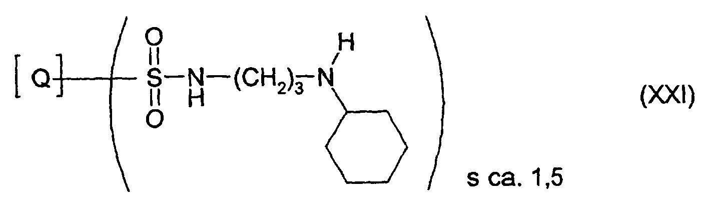

In einem Vierhalskolben werden 250 Teile Chlorsulfonsäure vorgelegt und 25 Teile 1,4-Diketo-3,6-di-(4-biphenyl)-pyrrolo[3,4-c]pyrrol so eingetragen und gelöst, daß die Temperatur 25°C nicht überschreitet. Dann werden innerhalb 15 min 19,64 Teile Thionylchlorid zugetropft und 15 min gerührt. Die Lösung wird innerhalb 15 min auf 1000 Teile Eiswasser, hergestellt aus 333 Teilen Eis und 667 Teilen Wasser, getropft. Das ausgefallene Sulfochlorid wird filtriert und mit 750 Teilen kaltem Wasser gewaschen. In einem Vierhalskolben werden 70 Teile Eis, 70 Teile Wasser und 23,4 Teile N-Cyclohexyl-1,3-propandiamin vorgelegt und bei 0 - 5°C der Sulfochloridpresskuchen eingetragen. Dann wird 1 h bei 0 - 5°C gerührt, in 30 min auf 25°C erwärmt, 30 min bei 25°C gerührt, in 30 min auf 50 °C erwärmt, 30 min bei 50°C gerührt, in 30 min auf 70°C erwärmt und 30 min bei 70°C gerührt. Das Produkt wird filtriert und mit Wasser gewaschen. Der Presskuchen wird in 782 Teilen Wasser suspendiert und mit wenig Natronlauge wird pH 8,6 eingestellt. Es wird so lange Wasserdampf durch die Suspension geleitet und kondensiert, bis ca. 860 Teile Destillat angefallen sind. Das Produkt wird filtriert, mit Wasser gewaschen und bei 80°C im Umluftschrank getrocknet. Man erhält 43,7 Teile Pigmentdispergator.
Aus den Intensitäten der Signale errechnet sich ein Substitutionsgrad von s ca. 1,5. ¹H-NMR (D₂SO₄): δ 7,8; 7,6; 5,5; 3,1; 2,7; 1,7; 1,6; 1,4; 1,2; 0,9; 0,7 ppm.

### Beispiel 24b

20 Teile eines handelsüblichen Pigments (C.l. Pigment Red 264) werden mit 2 Teilen Pigmentdispergator der Formel XXI, hergestellt gemäß Beipiel 24a mechanisch gemischt.
Man erhält eine Pigmentzubereitung, die im HS-Lack transparente und farbstarke Lackierungen liefert. Die Viskosität beträgt 2,5 s. Die Glanzmessung ergibt den Wert 78. Die Metalliclackierung ist farbstark und brillant.

### Beispiel 25a

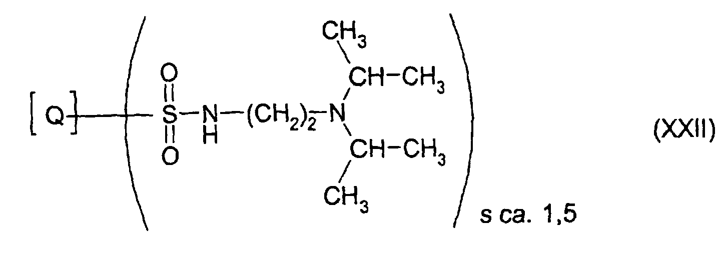

Man verfährt wie in Beispiel 24a, außer dass als Amin 22,3 Teile 2-(Diisopropylamino)ethylamin eingesetzt werden. Man erhält 40,2 Teile Pigmentdispergator.
Aus den Intensitäten der Signale errechnet sich ein Substitutionsgrad von s ca. 1,5.
¹H-NMR (D₂SO₄): δ 7,8;7,7; 7,6; 5,5; 3,3; 3,0; 0,9 ppm.

### Beispiel 25b

20 Teile eines handelsüblichen Pigments (C.l. Pigment Red 264) werden mit 2 Teilen Pigmentdispergator der Formel XXII, hergestellt gemäß Beipiel 25a mechanisch gemischt.
Man erhält eine Pigmentzubereitung, die im HS-Lack transparente und farbstarke Lackierungen liefert. Die Viskosität beträgt 1,5 s. Die Glanzmessung ergibt den Wert 80. Die Metalliclackierung ist farbstark und brillant.

### Beispiel 26a

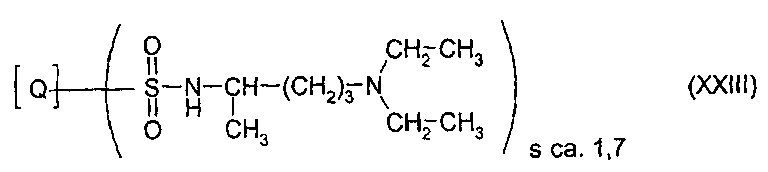

Man verfährt wie in Beispiel 24a, außer dass als Amin 24,5 Teile 2-Amino-5-diethylaminopentan eingesetzt werden. Der Presskuchen wird in 796 Teilen Wasser suspendiert und mit wenig Natronlauge wird pH 8,7 eingestellt. Es wird so lange Wasserdampf durch die Suspension geleitet und kondensiert, bis ca. 870 Teile Destillat angefallen sind. Das Produkt wird filtriert, mit Wasser gewaschen und bei 80°C im Umluftschrank getrocknet. Man erhält 41,6 Teile Pigmentdispergator.

Aus den Intensitäten der Signale errechnet sich ein Substitutionsgrad von s ca. 1,7.
¹H-NMR (D₂SO₄): δ 7,8; 7,6; 5,4; 3,7; 2,7; 2,6; 1,5; 1,3; 1,0; 0,8 ppm.

### Beispiel 26b

20 Teile eines handelsüblichen Pigments (C.l. Pigment Red 264) werden mit 2 Teilen Pigmentdispergator der Formel XXlll, hergestellt gemäß Beipiel 26a mechanisch gemischt.
Man erhält eine Pigmentzubereitung, die im HS-Lack transparente und farbstarke Lackierungen liefert. Die Viskosität beträgt 1,5 s. Die Glanzmessung ergibt den Wert 78. Die Metalliclackierung ist farbstark und brillant.

### Beispiel 27a

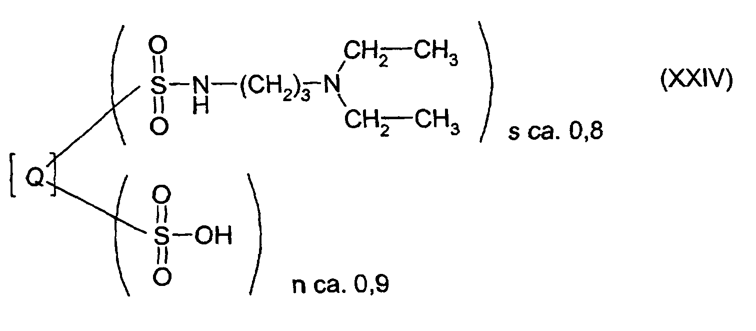

Man verfährt wie in Beispiel 10a, außer dass anstatt von 19,54 Teilen lediglich 7,16 Teile Diethylaminopropylamin eingesetzt werden.
Man erhält 36,7 g Pigmentdispergator.
¹H-NMR (D₂SO₄):δ 7,8; 7,6; 3,1; 2,7; 1,7; 0,8 ppm.
Aus den Intensitäten der Signale errechnet sich ein Substitutionsgrad von s ca. 0,8; daraus ergibt sich ein Substitutionsgrad von n ca. 0,9.

### Beispiel 27b

40 Teile eines handelsüblichen Pigments (C.I. Pigment Red 264) werden mit 4 Teilen Pigmentdispergator der Formel XXIV, hergestellt gemäß Beipiel 27a mechanisch gemischt. Die Lösemittelechtheit der Pigmentzubereitung ist sehr gut. Man erhält eine Pigmentzubereitung, die im PUR-Lack transparente und farbstarke Lackierungen liefert.

## Patentansprüche

1. Pigmentdispergator der allgemeinen Formel (I) 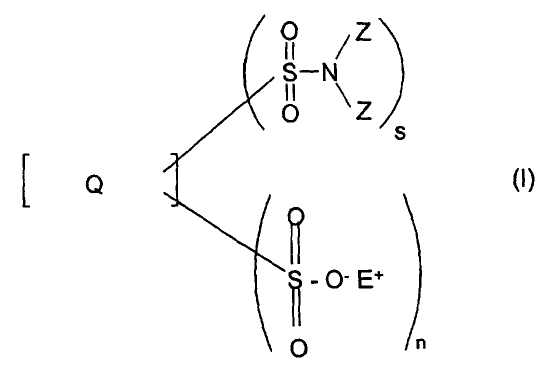 worin Q ein Rest der Diketopyrrolopyrrolverbindung der Formel (la) ist, 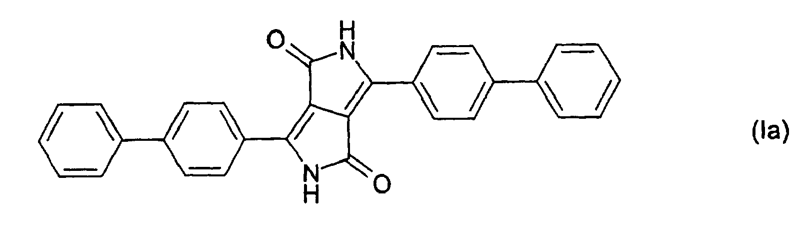
s eine Zahl von 0,1 bis 4,0 darstellt,
n eine Zahl von 0 bis 2 darstellt,
E⁺ H⁺ oder das Äquivalent M^{m+}/m eines Metallkations M^{m+} aus der 1. bis 5.
Hauptgruppe oder aus der 1. oder 2. oder der 4. bis 8. Nebengruppe des Periodensystems der chemischen Elemente bezeichnet, wobei m eine der Zahlen 1, 2 oder 3 ist, ein Ammoniumion N⁺R⁹R¹⁰R¹¹R¹², wobei die Substituenten R⁹, R¹⁰, R¹¹ und R¹² unabhängig voneinander jeweils ein Wasserstoffatom, C₁-C₃₀-Alkyl, C₂-C₃₀₋Alkenyl, C₅-C₃₀-Cycloalkyl, Phenyl, (C₁-C₈)-Alkyl-phenyl, (C₁-C₄)-Alkylen-phenyl oder eine (Poly)alkylenoxygruppe der Formel -[CH(R⁸⁰)-CH(R⁸⁰)-O]ₖ-H sind, in der k eine Zahl von 1 bis 30 ist und die beiden Reste R⁸⁰ unabhängig voneinander Wasserstoff, C₁-C₄-Alkyl oder, sofern k > 1 ist, eine Kombination davon bedeuten; und worin als R⁹, R¹⁰, R¹¹, und/oder R¹² ausgewiesenes Alkyl, Alkenyl, Cycloalkyl, Phenyl oder Alkylphenyl durch Amino, Hydroxy, und/oder Carboxy substituiert sein können;
oder wobei die Substituenten R⁹ und R¹⁰ zusammen mit dem quartären N-Atom ein fünf- bis siebengliedriges gesättigtes Ringsystem, das ggf. noch weitere Heteroatome aus der Gruppe O, S und N enthält, bilden können,
oder wobei die Substituenten R⁹, R¹⁰, und R¹¹ zusammen mit dem quartären N-Atom ein fünf- bis siebengliedriges aromatisches Ringsystem, das ggf. noch weitere Heteroatome aus der Gruppe O, S und N enthält und an dem ggf. zusätzliche Ringe ankondensiert sind, bilden können,
oder worin E⁺ ein Ammoniumion der Formel (Ic) definiert, 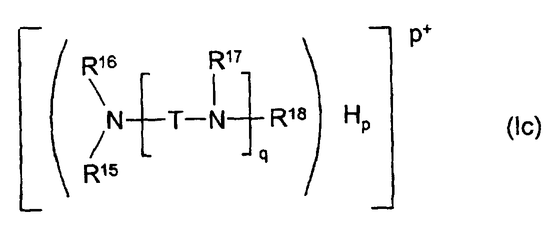 worin
R¹⁵, R¹⁶, R¹⁷ und R¹⁸ unabhängig voneinander Wasserstoff oder eine (Poly)alkylenoxygruppe der Formel -[CH(R⁸⁰)-CH(R⁸⁰)O]ₖ-H bedeuten, in der k eine Zahl von 1 bis 30 ist und die beiden Reste R⁸⁰ unabhängig voneinander für Wasserstoff, C₁-C₄-Alkyl oder, sofern k > 1 ist, eine Kombination davon bedeuten;
q eine Zahl von 1 bis 10;
p eine Zahl von 1 bis 5, wobei p ≤q+1 ist;
T einen verzweigten oder unverzweigten C₂-C₆-Alkylenrest bedeutet; oder worin T, wenn q > 1 ist, auch eine Kombination von verzweigten oder unverzweigten C₂-C₆-Alkylenresten sein kann;
und worin die beiden Reste Z gleich oder verschieden sind und Z die Bedeutung Z¹ oder Z⁴ hat, worin
Z¹ ein Rest der Formel (Ib) ist,
-[X-Y]_{q}R³ (Ib)
worin
X einen C₂-C₆-Alkylenrest, einen C₅-C₇-Cycloalkylenrest oder eine Kombination dieser Reste ist, wobei diese Reste durch 1 bis 4 C₁-C₄-Alkylreste, Hydroxyreste, (C₁-C₄)-Hydroxyalkylreste und/oder durch 1 bis 2 weitere C₅- C₇-Cycloalkylreste substituiert sein können, oder worin X, wenn q > 1 ist, auch eine Kombination der genannten Bedeutungen sein kann;
Y eine -O-, 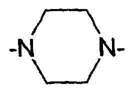 oder -NR²-Gruppe,
oder worin Y, wenn q > 1 ist, auch eine Kombination der genannten Bedeutungen sein kann;
q eine Zahl von 1 bis 10;
R² und R³ unabhängig voneinander ein Wasserstoffatom, eine substituierte oder unsubstituierte, oder teil- oder perfluorierte, verzweigte oder unverzweigte (C₁-C₂₀)-Alkylgruppe, eine substituierte oder unsubstituierte C₅-C₇- Cycloalkylgruppe oder eine substituierte oder unsubstituierte, oder teil-oder perfluorierte (C₂-C₂₀)-Alkenylgruppe darstellen, wobei die Substituenten Hydroxy, Phenyl, Cyano, Chlor, Brom, Amino, C₂-C₄-Acyl oder C₁-C₄-Alkoxy sein können, oder
R² und R³ zusammen mit dem N-Atom einen gesättigten, ungesättigten oder aromatischen heterocyclischen 5- bis 7-gliedrigen Ring bilden, der gegebenenfalls 1 oder 2 weitere Stickstoff-, Sauerstoff- oder Schwefelatome oder Carbonylgruppen im Ring enthält, gegebenenfalls durch 1, 2 oder 3 der Reste OH, Phenyl, CN, Cl, Br, C₁-C₄-Alkyl, C₁-C₄- Alkoxy, C₂-C₄-Acyl und Carbamoyl substituiert ist, und der gegebenenfalls 1 oder 2 benzoannellierte gesättigte, ungesättigte oder aromatische, carbocyclische oder heterocyclische Ringe trägt;
und worin
Z⁴ Wasserstoff, Hydroxy, Amino, Phenyl, (C₁-C₄)-Alkylen-phenyl, C₅-C₇- Cycloalkyl oder C₁-C₂₀-Alkyl ist, wobei der Phenylring, die (C₁-C₄)-Alkylen-phenyl-Gruppe und die Alkylgruppe durch ein oder mehrere Substituenten aus der Gruppe Cl, Br, CN, NH₂, OH, C₆H₅, mit 1, 2 oder 3 C₁-C₄-Alkoxyresten substituiertes C₆H₅, Carbamoyl, C₂-C₄-Acyl und C₁-C₄-Alkoxy substituiert sein können, der Phenylring und die (C₁-C₄)-Alkylen-phenyl-Gruppe auch durch NR²R³ substituiert sein können, oder die Alkylgruppe perfluoriert oder teilfluoriert ist.

2. Pigmentdispergator nach Anspruch 1, **dadurch gekennzeichnet, dass** s eine Zahl von 0,2 bis 3,0, vorzugsweise von 0,5 bis 2,5; und n eine Zahl von 0 bis 0,5, vorzugsweise von 0 bis 0,2 ist.

3. Pigmentdispergator nach Anspruch 1 oder 2, **dadurch gekennzeichnet, dass**
R² und R³ unabhängig voneinander ein Wasserstoffatom, eine C₁-C₆-Alkylgruppe oder eine durch 1 bis 2 Substituenten aus der Gruppe Hydroxy, Acetyl, Methoxy, Ethoxy, Chlor und Brom substituierte C₁-C₆-Alkylgruppe darstellen, oder
R² und R³ zusammen mit dem angrenzenden N-Atom einen Imidazolyl-, Piperidinyl-, Morpholinyl-, Pipecolinyl-, Pyrrolyl-, Pyrrolidinyl-, Pyrazolyl-, Pyrrolidinonyl-, Indolyl- oder Piperazinyl-Ring bilden.

4. Pigmentdispergator nach einem oder mehreren der Ansprüche 1 bis 3, **dadurch gekennzeichnet, dass** Z¹ die Bedeutung -[(CH₂)₃-NH]₂-H,
-(CH₂-CH₂-NH)₂H,
-(CH₂)₃-NH-(CH₂)₂-NH-(CH₂)₃-NH₂, 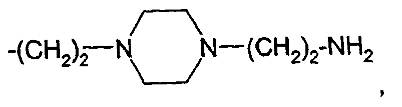 -(CH₂)₃-N(CH₃)-(CH₂)₃-NH₂, -(CH₂)₃-O-(CH₂)₂-O-(CH₂)₃-NH₂, -(CH₂)₃-O-(CH₂)₃-O-(CH₂)₃-NH₂, -(CH₂)₂-NH-(CH₂)₃-NH₂, -(CH₂)₃-NH-(CH₂)₂-NH₂, -(CH₂-CH₂-NH)₃-H, -(CH₂-CH₂-NH)₄-H, -(CH₂-CH₂-NH)₅-H, -(CH₂)₃-O-(CH₂)₂-O-(CH₂)₂-O-(CH₂)₃-NH₂, -(CH₂)₃-O-(CH₂)₄-O-(CH₂)₃-NH₂, 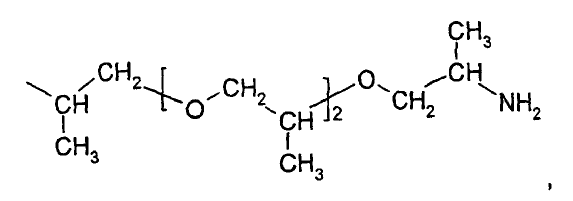 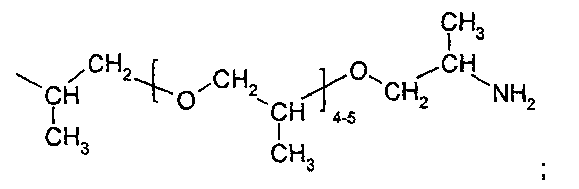 -(CH₂)₂-OH, -(CH₂)₃-OH, -CH₂-CH(CH₃)-OH, -CH(CH₂-CH₃)CH₂-OH, -CH(CH₂OH)₂, -(CH₂)₂-O-(CH₂)₂-OH oder -(CH₂)₃-O-(CH₂)₂-O-(CH₂)₂-OH; -(CH₂)₂-NH₂, -(CH₂)₃-NH₂, -CH₂-CH(CH₃)-NH₂, -CH₂ -C(CH₃)₂-CH₂-NH₂, 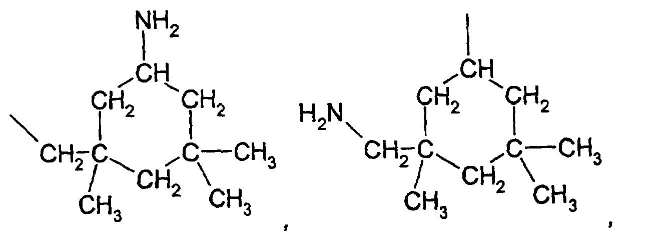 -(CH₂)₂-NH-CH₃, -(CH₂)₂-N(CH₃)₂, -(CH₂)₂-NH-CH₂-CH₃, -(CH₂)₂-N(CH₂-CH₃)₂, -(CH₂)₃-NH-CH₃, -(CH₂)₃-N(CH₃)₂, -(CH₂)₃-NH-CH₂-CH₃ oder -(CH₂)₃-N(CH₂-CH₃)₂ hat.

5. Pigmentdispergator nach einem oder mehreren der Ansprüche 1 bis 4, **dadurch gekennzeichnet, dass** Z⁴ die Bedeutung Wasserstoff, Amino, Phenyl, Benzyl, mit NR²R³ substituiertes Phenyl oder Benzyl, C₁-C₆-Alkyl , oder ein durch 1 bis 2 Substituenten aus der Gruppe Hydroxy, Acetyl, Methoxy und Ethoxy substituiertes C₂-C₆-Alkyl, Phenyl oder Benzyl hat.

6. Pigmentdispergator nach einem oder mehreren der Ansprüche 1 bis 5, **dadurch gekennzeichnet, dass** X ein C₂-C₄-Alkylenrest oder Cyclohexylen ist.

7. Verfahren zur Herstellung eines Pigmentdispergators nach einem oder mehreren der Ansprüche 1 bis 6, **dadurch gekennzeichnet, dass** man eine Diketopyrrolopyrrolverbindung der Formel (la) 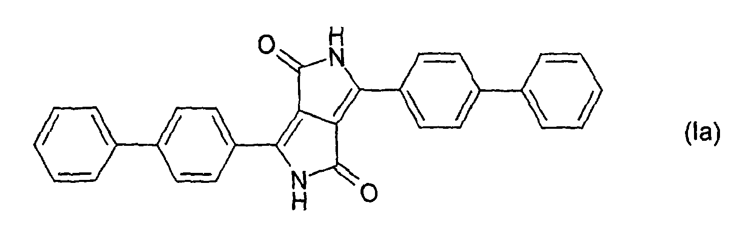 chlorsulfoniert und das entstandene Sulfochlorid mit einem Amin der Formel (V) 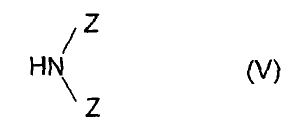 umsetzt.

8. Pigmentzubereitung, **gekennzeichnet durch** einen Gehalt an
a) mindestens einem organischen Basispigment und
b) mindestens einem Pigmentdispergator der Formel (I) gemäß einem oder mehreren der Ansprüche 1 bis 6.

9. Pigmentzubereitung nach Anspruch 8, **dadurch gekennzeichnet, dass** das organische Basispigment a) ein Perylen-, Perinon-, Chinacridon-, Chinacridonchinon-, Anthrachinon-, Anthanthron-, Benzimidazolon-, Disazokondensations-, Azo-, Indanthron-, Phthalocyanin-, Triarylcarbonium-, Dioxazin-, Aminoanthrachinon-, Diketopyrrolopyrrol-, Thioindigo-, Isoindolin-, Isoindolinon-, Pyranthron-, lsoviolanthron-, Carbon Black-Pigment (Ruß) oder eine Mischung davon ist.

10. Pigmentzubereitung nach Anspruch 8 oder 9, bestehend im wesentlichen aus
a) 50 bis 99,5 Gew.-%, vorzugsweise 60 bis 98,8 Gew.-%, mindestens eines Basispigments a),
b) 0,5 bis 20 Gew.-%, vorzugsweise 1 bis 15 Gew.-%, mindestens eines, vorzugsweise 1 oder 2, Pigmentdispergators b) der Formel (1),
c) 0 bis 20 Gew.-%, vorzugsweise 0,1 bis 15 Gew.-% an oberflächenaktiven Mitteln und
d) 0 bis 20 Gew.-%, vorzugsweise 0,1 bis 10 Gew.-% an weiteren üblichen Zusatzstoffen,
wobei die Anteile der jeweiligen Komponenten auf das Gesamtgewicht der Zubereitung (100 Gew.-%) bezogen sind.

11. Verfahren zur Herstellung einer Pigmentzubereitung nach einem oder mehreren der Ansprüche 8 bis 10, **dadurch gekennzeichnet, dass** man den oder die Pigmentdispergator(en) gemäß b) und das oder die Basispigment(e) miteinander mischt oder an einem beliebigen Zeitpunkt ihres Herstellungsprozesses aufeinander einwirken läßt.

12. Verwendung einer Pigmentzubereitung nach einem oder mehreren der Ansprüche 8 bis 10 zum Pigmentieren von hochmolekularen organischen Materialien, vorzugsweise von Kunststoffen, Harzen, Lacken, Anstrichfarben oder elektrophotographischen Tonern und Entwicklern, sowie von Tinten und Druckfarben.

13. Pigmentpräparation, bestehend im wesentlichen aus
a) einem oder mehreren organischen Basispigmenten;
b) einem oder mehreren Pigmentdispergatoren der Formel (I) gemäß einem oder mehreren der Ansprüche 1 bis 6; und
c) einem hochmolekularen organischen Material.

## Claims

1. A pigment dispersant of the formula (I) 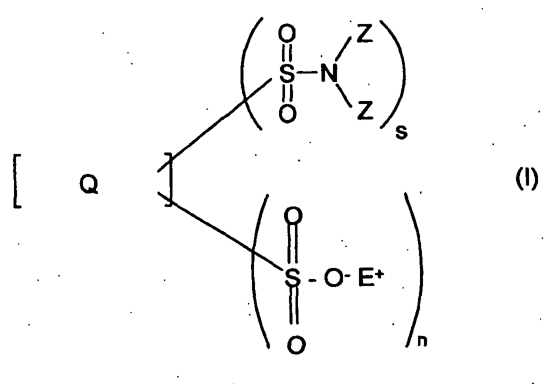 in which Q is a radical of the diketopyrrolopyrrole compound of the formula (Ia) 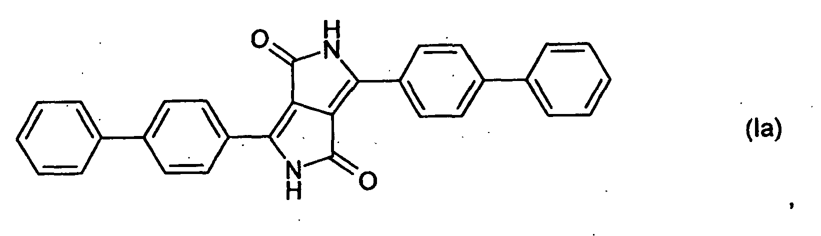
s is a number from 0.1 to 4.0,
n is a number from 0 to 2,
E⁺ is H⁺ or the equivalent M^{m+}/m of a metal cation M^{m+} from main groups 1 to 5 or transition groups 1 or 2 or 4 to 8 of the periodic system of the chemical elements, m being 1, 2 or 3, an ammonium ion N⁺R⁹R¹⁰R¹¹R¹², where the substituents R⁹, R¹⁰, R¹¹ and R¹² independently of one another are each a hydrogen atom, C₁-C₃₀-alkyl, C₂₋C₃₀-alkenyl, C₅-C₃₀-cycloalkyl, phenyl, (C₁-C₈)-alkyl-phenyl, (C₁-C₄)-alkylene-phenyl, or a (poly)alkyleneoxy group of the formula -[CH(R⁸⁰)-CH(R⁸⁰)-O]ₖ-H, in which k is a number from 1 to 30 and the two radicals R⁸⁰ independently of one another are hydrogen, C₁-C₄-alkyl or, if k is > 1, a combination thereof;
and in which alkyl, alkenyl, cycloalkyl, phenyl or alkylphenyl R⁹, R¹⁰, R¹¹, and/or R¹² may be substituted by amino, hydroxyl and/or carboxyl;
or where the substituents R⁹ and R¹⁰, together with the quaternary nitrogen atom, are able to form a five- to seven-membered saturated ring system containing, if desired, further heteroatoms from the group consisting of O, S and N,
or where the substituents R⁹ , R¹⁰ and R¹¹ , together with the quaternary nitrogen atom, are able to form a five- to seven-membered aromatic ring system, containing, if desired, further heteroatoms from the group consisting of O, S and N, and to which additional rings may be fused if desired,
or in which E⁺ defines an ammonium ion of the formula (Ic) 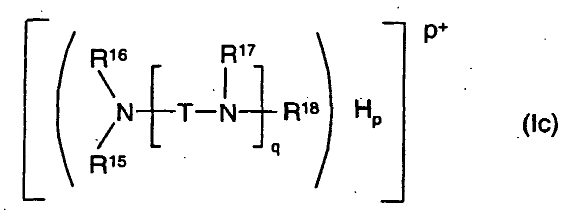 in which
R¹⁵, R¹⁶, R¹⁷ and R¹⁸ independently of one another are hydrogen or a (poly)alkyleneoxy group of the formula -[CH(R⁸⁰)-CH(R⁸⁰)O]ₖ-H, in which k is a number from 1 to 30 and the two radicals R⁸⁰ independently of one another are hydrogen, C₁-C₄-alkyl or, if k is > 1, a combination thereof;
q is a number from 1 to 10,
p is a number from 1 to 5, where p is ≤ q+1;
T is a branched or unbranched C₂-C₆-alkylene radical; or in which T, if q is > 1, may also be a combination of branched or unbranched C₂₋C₆-alkylene radicals;
and in which the two radicals Z are identical or different and Z has the definition Z¹ or Z⁴. where
Z¹ is a radical of the formula (Ib)
-[-Y]_{q}R³ (Ib)
in which
X is a C₂-C₆-alkylene radical, a C₅-C₇-cycloalkylene radical, or a combination of these radicals, it being possible for these radicals to be substituted by from 1 to 4 C₁-C₄-alkyl radicals, hydroxyl radicals, (C₁-C₄)-hydroxyalkyl radicals and/or by 1 or 2 further C₅-C₇-cycloalkyl radicals, or in which X, if q is > 1, may also be a combination of said definitions;
Y is a -O-, 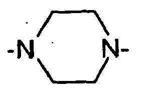 or -NR² - group,
or in which Y, if q is > 1; may also be a combination of said definitions;
q is a number from 1 to 10;
R² and R³ independently of one another are a hydrogen atom, a substituted or unsubstituted, or partly fluorinated or per-fluorinated, branched or unbranched (C-C₂₀)-alkyl group, a substituted or unsubstituted C₅-C₇-cycloalkyl group or a substituted or unsubstituted, or partly fluorinated or per-fluorinated (C₂-C₂₀)-alkenyl group, it being possible for the substituents to be hydroxyl, phenyl, cyano, chloro, bromo, amino, C₂-C₄-acyl or C₁-C₄-alkoxy, or
R² and R³, together with the nitrogen atom, form a saturated, unsaturated or aromatic heterocyclic 5- to 7-membered ring containing, if desired, 1. or 2 further nitrogen, oxygen or sulfur atoms or carbonyl groups in the ring, being substituted if desired by 1, 2 or 3 of the radicals OH, phenyl, CN, Cl, Br, C₁-C₄-alkyl, C₁-C₄- alkoxy, C₂-C₄-acyl and carbamoyl, and carrying, if desired, 1 or 2 benzo-fused saturated, unsaturated or aromatic, carbocyclic or heterocyclic rings;
and where
Z⁴ is hydrogen, hydroxyl, amino, phenyl, (C₁-C₄)-alkylene-phenyl, C₅-C₇-cycloalkyl or C₁-C₂₀-alkyl, it being possible for the phenyl ring, the (C₁-C₄)-alkylene-phenyl group and the alkyl group to be substituted by one or more substituents from the group consisting of Cl, Br, CN, NH₂, OH, C₆H₅, mono-, di- or tri-C₁-C₄-alkoxy-substituted C₆H₅, carbamoyl, C₂-C₄₋acyl and C₁-C₄-alkoxy, and it being possible for the phenyl ring and the (C₁-C₄)-alkylene-phenyl group to be substituted by NR²R³, or the alkyl group is perfluorinated or partly fluorinated.

2. The pigment dispersant as claimed in claim 1, wherein s is a number from 0.2 to 3.0, preferably from 0.5 to 2.5; and n is a number from 0 to 0.5, preferably from 0 to 0.2.

3. The pigment dispersant as claimed in claim 1 or 2, wherein
R²and R³ independently of one another are a hydrogen atom, a C₁-C₆- alkyl group or a. C₁-C₆-alkyl group substituted by 1 - or 2 substituents from the group consisting of hydroxyl, acetyl, methoxy, ethoxy, chloro and bromo, or 23
R² and R³, together with the adjacent nitrogen atom, form, an imidazolyl, piperidinyl, morpholinyl, pipecolinyl, pyrrolyl, pyrrolidinyl, pyrazolyl, pyrrolidinonyl, indolyl or piperazinyl ring.

4. The pigment dispersant as claimed in one or more of claims 1 to 3, wherein Z¹ has the definition -[(CH₂)₃-NH]₂-H, -(CH₂-CH₂-NH)₂H, -(CH₂)₃-NH-(CH₂)₂-NH-(CH₂)₃-NH₂, 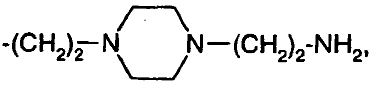 -(CH₂)₃-N(CH₃)-(CH₂)₃-NH₂, -(CH₂)₃-O-(CH₂)₂-O-(CH₂)₃-NH₂, -(CH₂)₃-O-(CH₂)₃-O-(CH₂)₃-NH₂, -(CH₂)₂-NH-(CH₂)₃-NH₂, -(CH₂)₃-NH-(CH₂)₂-NH₂, -(CH₂-CH₂-NH)₃-H, -(CH₂-CH₂-NH)₄-H, -(CH₂-CH₂-NH)₅-H, -(CH₂)₃-O-(CH₂)₂-O-(CH₂)₂-O-(CH₂)₃-NH₂, -(CH₂)₃-O-(CH₂)₄-O-(CH₂)₃-NH₂, 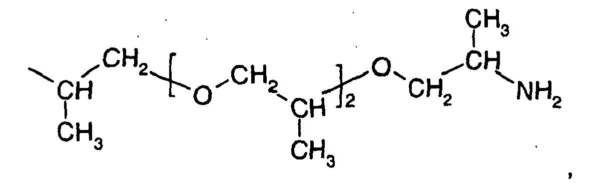 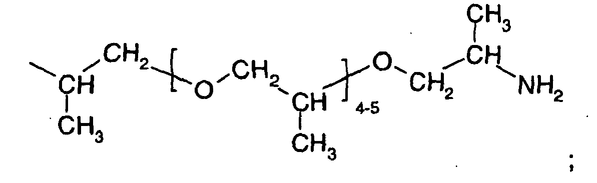 -(CH₂)₂-OH, -(CH₂)₃-OH, -CH₂-CH(CH₃)-OH, -CH(CH₂-CH₃)CH₂-OH, -CH(CH₂OH)₂, -(CH₂)₂-O-(CH₂)₂-OH or -(CH₂)₃-O-(CH₂)₂-O-(CH₂)₂-OH; -(CH₂)₂-NH₂, -(CH₂)₃-NH₂, -CH₂-CH(CH₃)-NH₂, -CH₂-C(CH₃)₂-CH₂-NH₂, 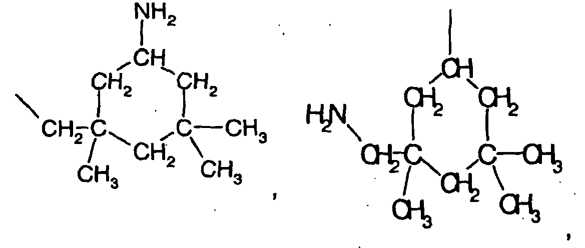 -(CH₂)₂-NH-CH₃, -(CH₂)₂-N(CH₃)₂, -(CH₂)₂-NH-CH₂-CH₃, -(CH₂)₂-N(CH2-CH₃)₂, -(CH₂)₃-NH-CH₃, -(CH₂)₃-N(CH₃)₂, -(CH₂)₃-NH-CH₂-CH₃ or -(CH₂)₃-N(CH₂-CH₃)₂.

5. The pigment dispersant as claimed in one or more of claims 1 to 4, wherein Z⁴ has the definition hydrogen, amino, phenyl, benzyl, NR²R³- substituted phenyl or benzyl, C₁-C₆-alkyl, or a C₂-C₆-alkyl, phenyl or benzyl substituted by 1 or 2 substituents from the group consisting of hydroxyl, acetyl, methoxy and ethoxy.

6. The pigment dispersant as claimed in one or more of claims 1 to 5, wherein X is a C₂-C₄-alkylene radical or cyclohexylene.

7. A process for preparing a pigment dispersant as claimed in one or more of claims 1 to 6, which comprises chlorosulfonating a diketopyrrolopyrrole compound of the formula (Ia) 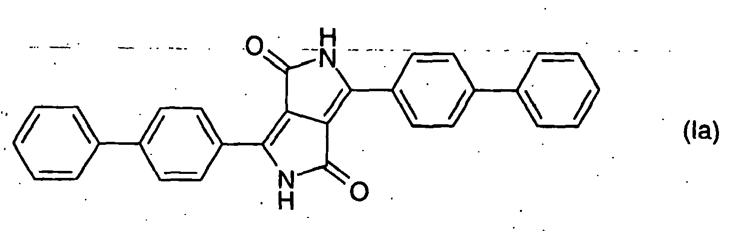 and reacting the resultant sulfochloride with an amine of the formula (V)

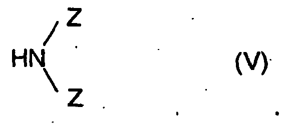

8. A pigment preparation comprising.
a) at least one organic base pigment, and
b) at least one pigment dispersant of the formula (I) as claimed in one or more of claims 1 to 6.

9. A pigment preparation as claimed in claim 8, wherein the organic base pigment a) is a perylene, perinone, quinacridone, quinacridonequinone, anthraquinone, anthanthrone, benzimidazolone, disazo condensation, azo, indanthrone, phthalocyanine, triarylcarbonium, dioxazine, aminoanthraquinone, diketopyrrolopyrrole, thioindigo, iso-indoline, isoindolinone, pyranthrone, isoviolanthrone or carbon black pigment or a mixture thereof.

10. The pigment preparation as claimed in claim 8 or 9, consisting essentially of
a) from 50 to 99.5% by weight, preferably from 60 to 98.8% by weight, of at least one base pigment a),
b) from 0.5 to 20% by weight, preferably from 1 to 15% by weight, of at least one, preferably 1 or 2, pigment dispersant(s) b) of the formula (I),
c) from 0 to 20% by weight, preferably from 0.1 to 15% by weight, of surfactants, and
d) from 0 to 20% by weight, preferably from 0.1 to 10% by weight, of further customary additives,
the fractions of the respective components being based on the overall weight of the preparation (100% by weight).

11. A process for preparing a pigment preparation as claimed in one or more of claims 8 to 10, which comprises mixing the pigment dispersant(s) as per b) and the base pigment(s) with one another or causing them to act on one another at any desired point in time of their production process.

12. The use of a pigment preparation as claimed in one or more of claims 8 to 10 for pigmenting high molecular mass organic material, preferably plastics, resins, varnishes, paints or electrophotographic toners and developers, and also writing, drawing and printing inks.

13. A prepared pigment formulation consisting essentially of
a) one or more organic base pigments;
b) one or more pigment dispersants of the formula (I) as claimed in one or more of claims 1 to 6; and
c) a high molecular mass organic material.

## Revendications

1. Dispersant pour pigments de formule générale (I) 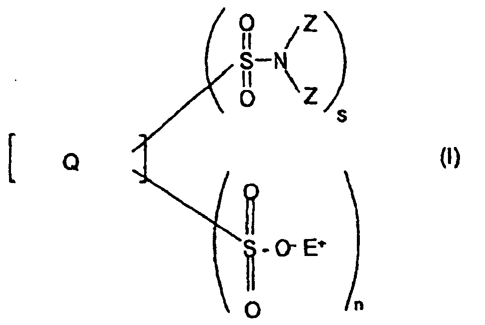 dans laquelle Q est un résidu d'un composé dicétopyrrolopyrrole de formule (Ia) 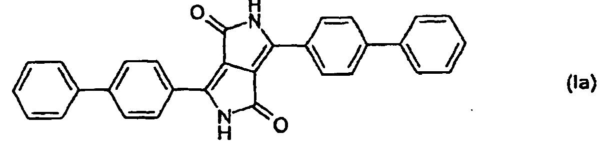 s est un nombre de 0,1 à 4,0,
n est un nombre de 0 à 2,
E⁺ est H⁺ ou l'équivalent M^{m+}/m d'un cation métallique M^{m+} du 1er au 5ème groupe principal, ou du 1er ou du 2ème, ou du 4ème au 8ème groupe secondaire du Tableau Périodique des Eléments Chimiques, où m est l'un des nombres 1, 2 ou 3, un ion ammonium N⁺R⁹R¹⁰R¹¹R¹² où les substituants R⁹, R¹⁰, R¹¹ et R¹² représentent chacun indépendamment des autres un atome d'hydrogène, un groupe alkyle en C₁-C₃₀, alcényle en C₂-C₃₀, cycloalkyle en C₅-C₃₀, phényle, (alkyle en C₁-C₈)-phényle, (alkylène en C₁-C₄) -phényle ou un groupe (poly) alkylènoxy de formule -[CH(R⁸⁰)-CH(R⁸⁰)-O]ₖ-H dans laquelle k est un nombre de 1 à 30 et les deux radicaux R⁸⁰ représentent chacun indépendamment de l'autre un atome d'hydrogène, un groupe alkyle en C₁-C₄ ou encore, si k > 1, une combinaison de ces derniers ; et où les groupes alkyle, alcényle, cycloalkyle, phényle ou alkylphényle représentant R⁹, R¹⁰, R¹¹ et/ou R¹² peuvent être substitués par des substituants amino, hydroxy et/ou carboxy ;
ou encore où les substituants R⁹ et R¹⁰, avec l'atome d'azote quaternaire, peuvent former un système cyclique saturé à cinq à sept chaînons, qui éventuellement contient encore d'autres hétéroatomes choisis dans l'ensemble comprenant O, S et N,
ou encore où les substituants R⁹, R¹⁰ et R¹¹, avec l'atome d'azote quaternaire, peuvent former un système cyclique aromatique à cinq à sept chaînons, qui éventuellement contient encore d'autres hétéroatomes choisis dans l'ensemble comprenant O, S et N, et auxquels sont éventuellement condensés des noyaux supplémentaires,
ou encore où E⁺ est un ion ammonium de formule (Ic) 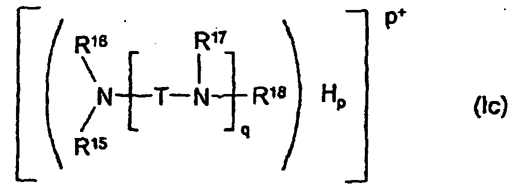 dans laquelle
R¹⁵, R¹⁶, R¹⁷ et R¹⁸ représentent chacun indépendamment des autres un atome d'hydrogène ou un groupe poly (alkylènoxy) de formule -[CH(R⁸⁰)-CH(R⁸⁰)-O]ₖ-H, dans laquelle k est un nombre de 1 à 30, et les deux radicaux R⁸⁰ représentent chacun indépendamment de l'autre un atome d'hydrogène, un groupe alkyle en C₁-C₄ ou encore, si k > 1, une combinaison de ces derniers ;
q est un nombre de 1 à 10 ;
p est un nombre de 1 à 5, avec p ≤ q+1 ;
T est un radical alkylène en C₂-C₆ à chaîne droite ou ramifiée ; ou encore où T, quand q > 1, peut aussi être une combinaison de radicaux alkylène en C₂-C₆ à chaîne droite et à chaîne ramifiée ;
et où les deux radicaux Z sont identiques ou différents, et Z représente Z¹ ou Z⁴, où
Z¹ est un radical de formule (Ib)
-[X-Y]_{q}R³ (Ib)
dans laquelle
X est un radical alkylène en C₂-C₆, un radical cycloalkylène en C₅-C₇ ou une combinaison de ces radicaux, ces radicaux pouvant être substitués par 1 à 4 radicaux alkylène en C₁-C₄, radicaux hydroxy, radicaux hydroxyalkyle en C₁-C₄ et/ou par 1 à 2 radicaux cycloalkyle en C₅-C₇ supplémentaires, ou encore où X, quand q > 1, peut aussi représenter une combinaison des significations mentionnées ;
Y est un groupe -O-, 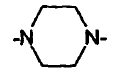 ou -NR²-
où Y, quand q > 1, peut aussi représenter une combinaison des significations mentionnées ;
q est un nombre de 1 à 10 ;
R² et R³ représentent chacun indépendamment'de l'autre un atome d'hydrogène, un groupe alkyle en C₁-C₂₀ à chaîne droite ou ramifiée, substitué ou non substitué, partiellement fluoré ou perfluoré, un groupe cycloalkyle en C₅-C₇ substitué ou non substitué, ou un groupe alcényle en C₂-C₂₀ substitué ou non substitué, ou partiellement fluoré ou perfluoré, les substituants pouvant être des groupes hydroxy, phényle, cyano, chloro, bromo, amino, acyle en C₂-C₄ ou alcoxy en C₁-C₄, ou bien
R² et R³, avec l'atome d'azote, forment un noyau à 5 à 7 chaînons hétérocycliques, saturés, insaturés ou aromatiques, qui éventuellement contient dans le noyau 1 ou 2 atomes d'oxygène, d'azote ou de soufre ou groupes carbonyle supplémentaires, est éventuellement substitué par 1, 2 ou 3 des radicaux OH, phényle, CN, Cl, Br, alkyle en C₁-C₄, alcoxy en C₁-C₄, acyle en C₂-C₄ et carbamoyle, et éventuellement porte 1 ou 2 noyaux benzocondensés saturés, insaturés ou aromatiques, carbocycliques ou hétérocycliques ;
et où
Z⁴ est un atome d'hydrogène, un groupe hydroxy, amino, phényle, (alkylène en C₁-C₄)phényle, cycloalkyle en C₅-C₇ ou alkyle en C₁-C₂₀, le noyau phényle, le groupe (alkylène en C₁-C₄)phényle ou le groupe alkyle pouvant être substitués par un ou plusieurs substituants choisis dans l'ensemble comprenant Cl, Br, CN, NH₂, OH, C₆H₅, C₆H₅ substitué 1, 2 ou 3 substituants alcoxy en C₁-C₄, carbamoyle, acyle en C₂-C₄ et alcoxy en C₁-C₄, le noyau phényle et le groupe (alkylène en C₁-C₄)-phényle peuvent aussi être substitués par NR²R³, ou encore le groupe alkyle est perfluoré ou partiellement fluoré.

2. Dispersant pour pigments selon la revendication 1, **caractérisé en ce que** s est un nombre de 0,2 à 3,0, de préférence de 0,5 à 2,5 ; et n est un nombre de 0 à 0, 5 et de préférence de 0 à 0,2.

3. Dispersant pour pigments selon la revendication 1 ou 2, **caractérisé en ce que**
R² et R³ représentent chacun indépendamment de l'autre un atome d'hydrogène, un groupe alkyle en C₁-C₆ ou un groupe alkyle en C₁-C₆ substitué par 1 à 2 substituants choisis dans l'ensemble comprenant les groupes hydroxy, acétyle, méthoxy, éthoxy, chloro et bromo, ou
R² et R³, avec l'atome d'azote qui leur est voisin, forment un noyau imidazolyle, pipéridinyle, morpholinyle, pipécolinyle, pyrrolyle, pyrrolidinyle, pyrazolyle, pyrrolidinonyle, indolyle ou pipérazinyle.

4. Dispersant pour pigments selon l'une ou plusieurs des revendications 1 à 3, **caractérisé en ce que** Z¹ représente -[(CH₂)₃-NH]₂-H, -(CH₂CH₂-NH)₂N, -(CH₂)₃-NH-(CH₂)₂-NH-(CH₂)₃-NH₂. 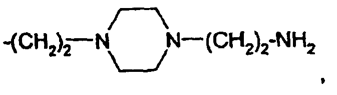 -(CH₂)₃-N(CH₃)-(CH₂)₃-NH₂, -(CH₂)₃-O-(CH₂)₂-O-(CH₂)₃-NH₂. -(CH₂)₃-O-(CH₂)₃-O-(CH₂)₃-NH₂, -(CH₂)₂-NH-(CH₂)₃-NH₂, -(CH₂)₃-NH-(CH₂)₂-NH₂, -(CH₂-CH₂NH)₃-H, -(CH₂-CH₂-NH)₄-H, -(CH₂-CH₂-NH)₅-H, -(CH₂)₃-O-(CH₂)₂-O-(CH₂)₂-O-(CH₂)₃-NH₂, -(CH₂)₃-O-(CH₂)₄-O-(CH₂)₃-NH₂, 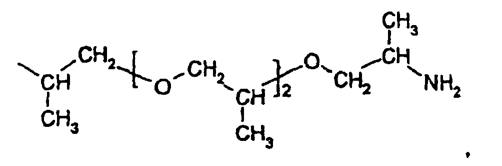 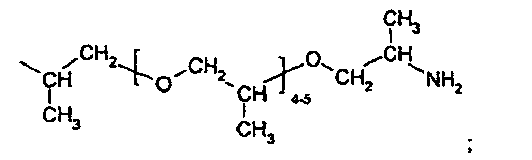 -(CH₂)₂-OH, -(CH₂)₃-OH, -CH₂-CH(CH₃)-OH, -CH(CH₂-CH₃)CH₂-OH. -CH(CH₂OH)₂, -(CH₂)2-O-(CH₂)₂-OH oder -(CH₂)₃-O-(CH₂)-O-(CH₂)₂-OH; -(CH₂)₂-NH₂, -(CH₂)₃-NH₂, -CH₂CH(CH₃)-NH₂, -CH₂-C(CH₃)₂-CH₂-NH₂. 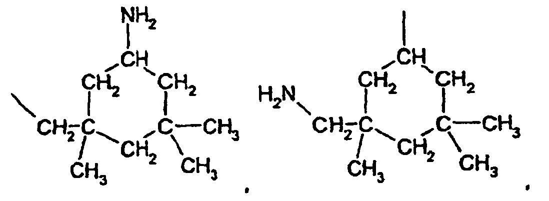 (CH₂)₂-NH-CH₃, -(CH₂)₂-N(CH₃)₂, -(CH₂)₂-NH-CH₂-CH₃, -(CH₂)₂-N(CH₂-CH₃)₂, -(CH₂)₃-NH-CH₃, -(CH₂)₃-N(CH₃)₂, -(CH₂)₃-NH-CH₂-CH₃ oder -(CH₂)₃-N(CH₂-CH₃)₂
(oder = ou)

5. Dispersant pour pigments selon l'une ou plusieurs des revendications 1 à 4, **caractérisé en ce que** Z⁴ désigne un atome d'hydrogène ou un groupe amino, phényle, benzyle, phényle bu benzyle substitué par NR²R³, alkyle en C₁-C₆, ou un groupe alkyle en C₂-C₆, phényle ou benzyle substitué par 1 à 2 substituants choisis dans l'ensemble comprenant les groupes hydroxy, acétyle, méthoxy et éthoxy.

6. Dispersant pour pigments selon l'une ou plusieurs des revendications 1 à 5, **caractérisé en ce que** X est un radical alkylène en C₂-C₄ ou cyclohexylène.

7. Procédé de préparation d'un dispersant pigmentaire selon l'une ou plusieurs des revendications 1 à 6, **caractérisé en ce qu'**on soumet à une chlorosulfonation un composé dicétopyrrolopyrrole de formule (Ia) 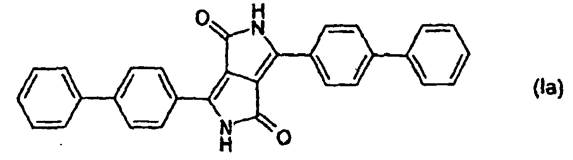 et on fait réagir le sulfochlorure ainsi obtenu avec une amine de formule (V).

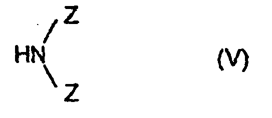

8. Préparation pigmentaire, **caractérisée en ce qu'**elle contient
a) au moins un pigment organique de base, et
b) au moins un dispersant pour pigment de formule (I) selon l'une ou plusieurs des revendications 1 à 6.

9. Préparation pigmentaire selon la revendication 8, **caractérisée en ce que** le pigment organique de base a) est un pigment de pérylène, de périnone, de quinacridone, de quinacridonequinone, d'anthraquinone, d'anthanthrone, de benzimidazolone, de condensation disazoique, azoïque, d'indanthrone, de phtalocyanine, de triarylcarbonium, de dioxazine, d'aminoanthraquinone, de dicétopyrrolopyrrole, de thioindigo, d'isoindoline, d'isoindolinone, de pyranthrone, d'isoviolanthrone, de noir de carbone, ou un mélange de ceux-ci.

10. Préparation pigmentaire selon la revendication 8 ou 9, constituée pour l'essentiel
a) de 50 à 99,5 % en poids, de préférence de 60 à 98,8 % en poids d'au moins un pigment de base a),
b) de 0,5 à 20 % en poids, de préférence de 1 à 15 % en poids, d'au moins un et de préférence de 1 ou 2 dispersants pour pigment b) de formule (I),
c) de 0 à 20 % en poids, de préférence de 0,1 à 15 % en poids de substances tensioactives, et
d) de 0 à 20 % en poids, de préférence de 0,1 à 10 % en poids d'autres additifs usuels,
la proportion des différents composants étant rapportée au poids total de la composition (100 % en poids).

11. Procédé de fabrication d'une préparation pigmentaire selon l'une ou plusieurs des revendications 8 à 10, **caractérisé en ce qu'**on mélange les uns aux autres le ou les dispersants pour pigments selon b) et le ou les pigments de base (e), ou bien on les fait agir les uns sur les autres à un instant quelconque au cours de son procédé de fabrication.

12. Utilisation d'une préparation pigmentaire selon l'une ou plusieurs des revendications 8 à 10 pour pigmenter des matériaux organiques à grande masse moléculaire, de préférence des matières plastiques, des résines, des vernis, des peintures ou des toners et révélateurs électrophotographiques, ainsi que des encres et des encres d'imprimerie.

13. Préparation pigmentaire constituée pour l'essentiel
a) d'un ou plusieurs pigments organiques de base ;
b) d'un ou plusieurs dispersants pour pigments de formule (I) selon l'une ou plusieurs des revendications 1 à 6 ; et
c) d'un matériau organique à grande masse moléculaire.
